# EUROPEAN PATENT APPLICATION

(11) **EP 1 744 440 A2**
(43) Date of publication of application: **17.01.2007**
(21) Application number: 06253427.6
(22) Date of filing: 29.06.2006
(51) Int. Cl.: H02M 3/335, H02M 1/12

(54) **Switching power supply circuit**

(30) Priority: 30.06.2005 JP 2005192425; 05.07.2005 JP 2005196474; 05.07.2005 JP 2005196475; 19.08.2005 JP 2005238473
(71) Applicant: SONY CORPORATION, Tokyo 141 (JP)
(72) Inventor: Yasumura, Masayuki, Shinagawa-ku Tokyo 141 (JP)
(74) Representative: Jackson, Jonathan Andrew

(57) **Abstract**

A switching power supply circuit is described that does not require an active filter. As there is no active filter, the described power supply circuit has an improved power conversion efficiency. Further, the size, cost and weight of the power supply circuit is reduced due to the absence of an active filter. Instead of using an active filter, the described switching power supply circuit is based on a voltage resonant circuit that allows a soft switching operation.

## Description

The present invention relates to a switching power supply circuit.

Due to recent development of switching elements that can withstand comparatively large current and voltage of a high frequency, major part of power supply circuits that rectify a commercial AC voltage to obtain a desired DC voltage employs a switching system.

The switching power supply circuits allow miniaturization of transformers and other devices through enhancement of a switching frequency, and are used as a high-power DC-DC converter for a power supply in various electronic apparatuses.

Typically rectifying of a commercial AC voltage leads to a distorted waveform of the current that flows to a smoothing circuit, and therefore a power factor, which indicates the use efficiency of the power supply, is problematically decreased.

Furthermore, there is a need for measures for suppressing harmonic waves arising due to the distorted current waveform.

Therefore, a method employing a so-called active filter has been known as a related technique for improving the power factor (e.g., refer to Japanese Patent Laid-Open No. Hei 6-327246, which is published as JP-A-08/85328 (FIG. 16)).

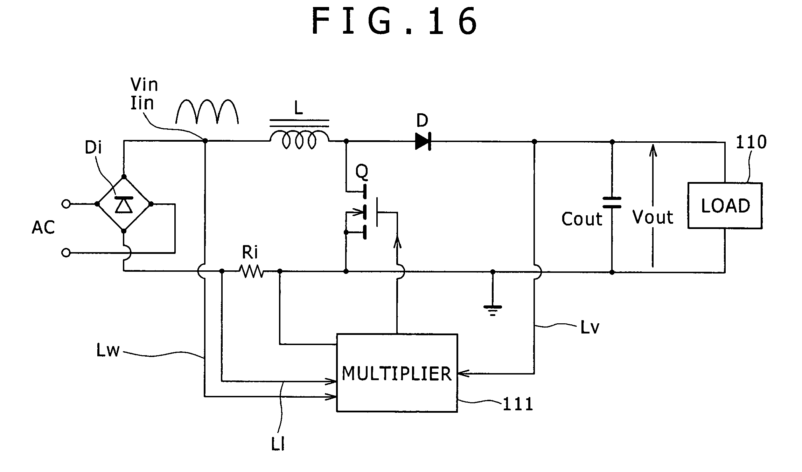

The basic configuration of such an active filter is illustrated in FIG. 16 for example.

Referring to FIG. 16, a bridge rectifier circuit Di is connected to a commercial alternating-current power supply line AC. An output capacitor Cout is connected in parallel to the positive/negative lines of the bridge rectifier circuit Di. The rectified output from the bridge rectifier circuit Di is supplied to the output capacitor Cout, so that a DC voltage Vout is obtained as the voltage across the output capacitor Cout. This DC voltage Vout is supplied as an input voltage to a load 110 such as a subsequent-stage DC-DC converter.

As the configuration for power factor improvement, an inductor L, a fast-recovery diode D, a resistor Ri, a switching element Q, and a multiplier 111 are provided as shown in the drawing.

The inductor L and the diode D are connected in series to each other between the positive output terminal of the bridge rectifier circuit Di and the positive electrode of the output capacitor Cout.

The resistor Ri is provided between the negative output terminal of the bridge rectifier circuit Di (primary-side ground) and the negative electrode of the output capacitor Cout.

A MOS-FET is chosen as the switching element Q in this circuit, and the switching element Q is provided between the connecting node of the inductor L and the diode D, and the primary-side ground.

Connected to the multiplier 111 are a current detecting line LI and a waveform input line Lw as a feedforward circuit, and a voltage detecting line Lv as a feedback circuit.

The multiplier 111 detects the level of the rectified current flowing from the negative output terminal of the bridge rectifier circuit Di, input through the current detecting line LI.

In addition, the multiplier 111 also detects the waveform of the rectified voltage from the positive output terminal of the bridge rectifier circuit Di, input through the waveform input line Lw. That is, the multiplier 111 detects the absolute values of the AC input voltage from the commercial alternating-current power supply line AC.

Furthermore, the multiplier 111 detects a variation difference of the DC input voltage based on the DC voltage Vout across the output capacitor Cout input through the voltage detecting line Lv.

The multiplier 111 outputs a drive signal for driving the switching element Q.

The current detecting line LI supplies the multiplier 111 with the rectified current flowing through the negative output terminal of the bridge rectifier circuit Di. The multiplier 111 detects the level of the rectified current input from the current detecting line LI. Furthermore, the multiplier 111 detects a variation difference of the DC input voltage based on the DC voltage Vout across the output capacitor Cout input through the voltage detecting line Lv. In addition, the multiplier 111 also detects the waveform of the rectified voltage from the positive output terminal of the bridge rectifier circuit Di, input through the waveform input line Lw. That is, the multiplier 111 detects the absolute values of the AC input voltage.

The multiplier 111 initially multiplies the rectified current level detected through the current detecting line LI described above and the variation difference of the DC input voltage detected through the voltage detecting line Lv together. Subsequently, the multiplier 111 produces from the multiplication result and the waveform of the AC input voltage detected through the waveform input line Lw, a current command value with the same waveform as that of the AC input voltage VAC.

Moreover, the multiplier 111 compares the current command value with the actual AC input current level (detected based on the input from the current detecting line LI), and implements pulse width modulation (PWM) control for a PWM signal according to the difference therebetween, to produce a drive signal based on the PWM signal. The switching element Q is switch-driven by the drive signal. As a result, the AC input current is controlled so as to have the same waveform as that of the AC input voltage, so that the power factor is improved to almost 1. In addition, the current command value produced by the multiplier is controlled so that the amplitude thereof varies depending upon the variation difference of the rectified and smoothed voltage. Therefore, variation in the rectified and smoothed voltage is also suppressed.

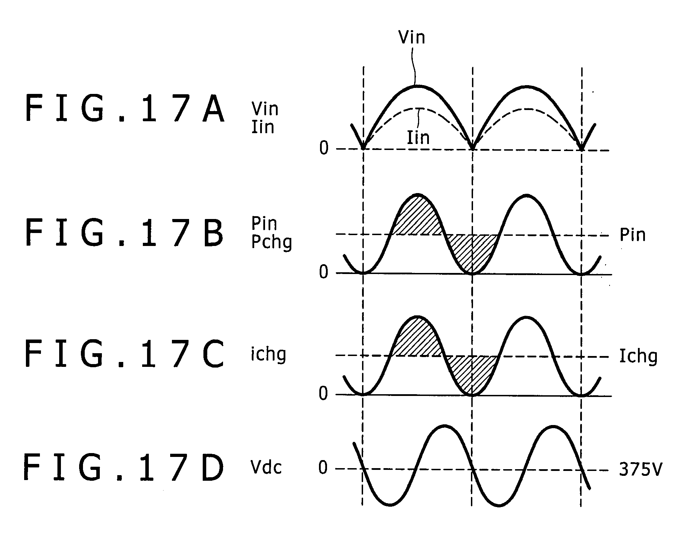

FIG. 17A shows an input voltage Vin and an input current Iin input to the active filter circuit shown in FIG. 16. The voltage Vin corresponds to the voltage waveform as the rectified output from the bridge rectifier circuit Di. The current Iin corresponds to the current waveform as the rectified output from the bridge rectifier circuit Di. The waveform of the current Iin has the same conduction angle as that of the rectified output voltage (voltage Vin) from the bridge rectifier circuit Di. This indicates that the waveform of the AC input current flowing from the commercial AC power supply to the bridge rectifier circuit Di also has the same conduction angle as that of the current Iin. That is, a power factor of approximately 1 is achieved.

FIG. 17B shows the change of energy (power) Pchg that is input and output to and from the output capacitor Cout. The output capacitor Cout stores energy when the input voltage Vin is high and discharges energy when it is low, to thereby maintain the flow of the output power.

FIG. 17C shows the waveform of charging/discharging current Ichg to and from the output capacitor Cout. This charging/discharging current Ichg is the current that flows in response to the storing/discharging operation of the output capacitor Cout for the energy Pchg, as is also apparent from the phase equivalence between the waveforms of the current Ichg and the energy Pchg of FIG. 17B.

The charging/discharging current Ichg has almost the same waveform as that of the second harmonic of the AC input voltage, unlike the input current Iin. Due to the energy flow from and to the output capacitor Cout, a ripple voltage Vdc arises in the second harmonic component of the AC input voltage as shown in FIG. 17D. The ripple voltage Vdc has a phase shift of 90° relative to the charging/discharging current Ichg in FIG 17C for conservation of ineffective energy. The rating of the output capacitor Cout is determined in consideration of processing of the second harmonic ripple current and a high-frequency ripple current from a boost converter switch for modulating the second harmonic ripple current.

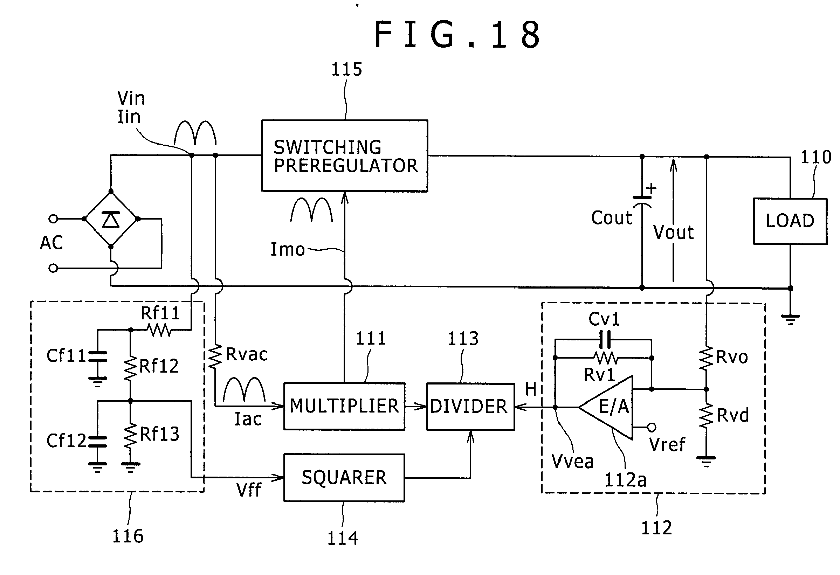

FIG. 18 illustrates a configuration example of an active filter that includes basic control circuitry, based on the circuit configuration of FIG. 16. The same parts in FIG. 18 as those in FIG. 16 are given the same numerals and will not be described below.

A switching preregulator 115 is provided between the positive output terminal of the bridge rectifier circuit Di and the positive electrode of the output capacitor Cout. The switching preregulator 115 is equivalent to the part formed of the switching element Q, the inductor L and the diode D in FIG. 16.

The control circuitry including the multiplier 111 additionally includes a voltage error amplifier 112, a divider 113, and a squarer 114.

In the voltage error amplifier 112, the DC voltage Vout across the output capacitor Cout is divided by voltage-dividing resistors Rvo-Rvd, followed by being input to the non-inverting input of an operational amplifier 112a. A reference voltage Vref is input to the inverting input of the operational amplifier 112a. The operational amplifier 112a amplifies the voltage having the level corresponding to the error between the reference voltage Vref and the divided DC voltage Vout by the gain determined dependent upon a feedback resistor Rv1 and a capacitor Cv1, and outputs the amplified voltage as an error output voltage Vvea to the divider 113.

A so-called feedforward voltage Vff is input to the squarer 114. This feedforward voltage Vff is an output (average input voltage) resulting from averaging of the input voltage Vin by an averaging circuit 116 (Rf11, Rf12, Rfl3, Cf11, Cf12). The squarer 114 squares the feedforward voltage Vff and outputs the resultant voltage to the divider 113.

The divider 113 divides the error output voltage Vvea from the voltage error amplifier 112 by the square of the average input voltage output from the squarer 114, and outputs a signal as the division result to the multiplier 111.

That is, a voltage loop is formed of the system including the squarer 114, the divider 113 and the multiplier 111. The error output voltage Vvea output from the voltage error amplifier 112 is divided by the square of the average input voltage (Vff) before being multiplied by a rectified input signal Iac in the multiplier 111. Due to this circuitry, the gain of the voltage loop is not changed but kept constant as the square of the average input voltage (Vff). The average input voltage (Vff) has the function of an open loop improvement sent in the forward direction in the voltage loop.

Input to the multiplier 111 are the output resulting from the division of the error output voltage Vvea by the divider 113 and the rectified output (Iac) from the positive output terminal of the bridge rectifier circuit Di (rectified output line) via a resistor Rvac. In FIG. 18, the rectified output is indicated not as voltage but as current (Iac). The multiplier 111 multiplies these inputs together to thereby produce and output a current programming signal (multiplier output signal) Imo. The signal Imo is equivalent to the current command value described for FIG. 16. Varying the average amplitude of the current programming signal allows control of the output voltage Vout. Specifically, a PWM signal dependent upon a change of the average amplitude of the current programming signal is produced, and switch-driving is carried out by a drive signal based on the PWM signal. Thus, the level of the output voltage Vout is controlled.

Therefore, the current programming signal has the waveform of the average amplitude for controlling the input voltage and the output voltage. The active filter controls not only the output voltage Vout but also the input voltage Vin. Since it can be said that the current loop in the feedforward circuit is programmed based on the rectification line voltage, the input to a subsequent-stage converter (load 110) is resistive input.

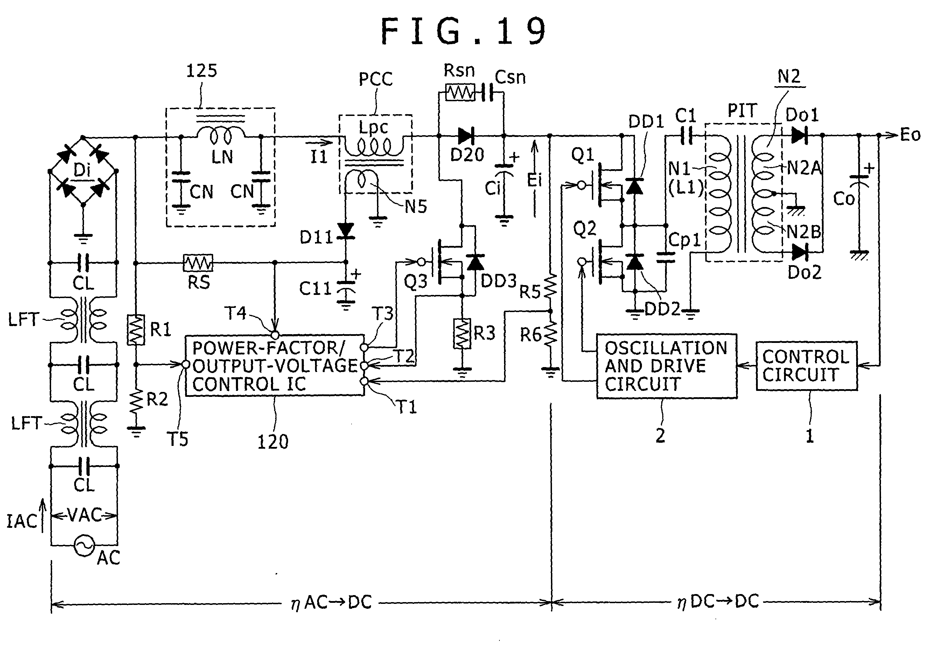

FIG. 19 illustrates a configuration example of a power supply circuit obtained by coupling an active filter based on the configuration in FIG. 16 to a current resonant converter as a subsequent-stage configuration. The power supply circuit in FIG. 19 employs a configuration that is compatible with the commercial AC supply input levels, indicated as the AC input voltages VAC, in the range from 85 V to 264 V, and is compatible with the variation range of load power Po from 300 W to 0 W. The current resonant converter employs a configuration based on a separately-excited half-bridge connection system.

In the power supply circuit in FIG. 19, based on the illustrated connecting structure, a commercial alternating-current power supply line AC is provided with a common mode noise filter formed of two line-filter transformers LFT and three across-line capacitors CL, and a bridge rectifier circuit Di is connected downstream of the common mode noise filter.

The rectified output line from the bridge rectifier circuit Di is connected to a normal mode noise filter 125 obtained by coupling one choke coil LN and two filter capacitors (film capacitors) CN, CN to each other as shown in the drawing.

The positive output terminal of the bridge rectifier circuit Di is coupled to the positive electrode of a smoothing capacitor Ci via the series connection of the choke coil LN, an inductor Lpc in a power choke coil PCC, and a fast-recovery rectifier diode D20. This smoothing capacitor Ci is equivalent to the output capacitor Cout in FIGS. 16 and 17. The inductor Lpc of the power choke coil PCC and the diode D20 are equivalent to the inductor L and the diode D, respectively, shown in FIG. 16.

The rectifier diode D20 is connected in parallel to an RC snubber circuit formed by the series connection of a capacitor Csn and a resistor Rsn.

A switching element Q3 is equivalent to the switching element Q in FIG 16. Specifically, for actual implementation of a switching element in an active filter, the switching element Q3 in this circuit is provided between the connecting node of the power choke coil Lpc and the fast-recovery rectifier diode D20, and the primary-side ground (via a resistor R3).

A MOS-FET is chosen as the switching element Q3.

A power-factor/output-voltage control IC 120 is an integrated circuit (IC) for controlling the operation of the active filter that improves the power factor so that the power factor is brought close to 1.

The power-factor/output-voltage control IC 120 includes a multiplier, a divider, a voltage error amplifier, a PWM control circuit, and a drive circuit that outputs a drive signal for switch-driving the switching element. Circuitry equivalent to the multiplier 111, the voltage error amplifier 112, the divider 113, and the squarer 114 shown in FIG. 18 is included in this power-factor/output-voltage control IC 120.

A feedback circuit is formed so that a voltage resulting from division of the voltage across the smoothing capacitor Ci (rectified and smoothed voltage Ei) by voltage-dividing resistors R5 and R6 is input to a terminal T1 of the power-factor/output-voltage control IC 120.

Furthermore, as a feedforward circuit, a series circuit of voltage-dividing resistors R1 and R2 is provided between the positive output terminal of the bridge rectifier circuit Di and the primary-side ground. The connecting node between the voltage-dividing resistors R1 and R2 is connected to a terminal T5. Thus, the rectified output from the bridge rectifier circuit Di is input to the terminal T5. In this manner, the feedforward circuit is formed as the line equivalent to the current detecting line LI in FIG. 16.

A terminal T4 is supplied with an operating supply voltage for the power-factor/output-voltage control IC 120. Specifically, an alternating voltage is excited in a winding N5 that is transformer-coupled to the inductor Lpc in the power choke coil PCC. The excited alternating voltage is converted to a low DC voltage by a half-wave rectifier circuit formed of a diode D11 and a capacitor C11, and this DC voltage is input to the terminal T4.

The terminal T4 is also coupled to the positive output terminal of the bridge rectifier circuit Di via a start-up resistor Rs. When the commercial alternating-current power supply AC is powered up and the power supply circuit is activated, the rectified output obtained from the positive output terminal of the bridge rectifier circuit Di is supplied via the start-up resistor Rs to the terminal T4. The power-factor/output-voltage control IC 120 uses the thus supplied rectified output as its start-up supply voltage to thereby start the operation.

From a terminal T3, a drive signal (gate voltage) for driving the switching element is output to the gate of the switching element Q3.

The switching element Q3 implements switching operation in response to the applied drive signal.

A resistor R3 is provided between the source of the switching element Q3 and the primary-side ground, and the connecting node between the source of the switching element Q3 and the resistor R3 is connected to a terminal T2. The resistor R3 is to detect an overcurrent flowing through the switching element Q3 as a voltage. When a voltage with the level corresponding to an overcurrent is detected through the terminal T2, the power-factor/output-voltage control IC 120 implements protective operation, such as operation of stopping the switching operation of the switching element Q3.

The switch-driving of the switching element Q3 is implemented by a drive signal based on PWM control so that the conduction angle of the rectified output current becomes almost the same as that of the rectified output voltage waveform as described above with FIGS. 16 and 17. The state where the conduction angle of the rectified output current waveform becomes almost the same as that of the rectified output voltage is equivalent to the state where the conduction angle of the AC input current flowing from the commercial alternating-current power supply AC becomes almost the same as that of waveform of the AC input voltage VAC, and as a result, the power factor is controlled to become approximately 1. That is, power factor improvement is achieved.

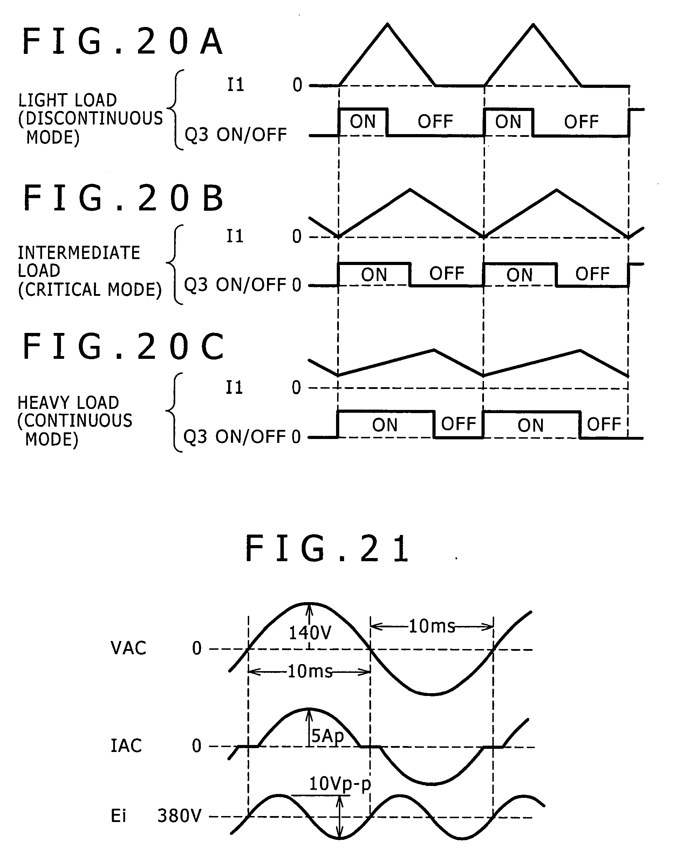

The power factor improvement operation of an actual active filter with the above-described configuration will be described below with reference to FIGS. 20 and 21.

FIG. 20 shows the switching operation of the switching element Q3 and a current I1 flowing through the inductor Lpc in the power choke coil PCC, dependent upon load variation. FIG 20A shows operation when the load is a light load. FIG. 20B shows one when it is an intermediate load. FIG. 20C shows one when it is a heavy load.

As is apparent from a comparison among FIGS. 20A, 20B and 20C, as the load becomes heavier, the ON period of the switching element Q3 in the switching operation thereof becomes longer while the switching frequency is kept constant. That is, switch-driving based on PWM control is implemented.

According to this switching operation, when the load is a light load, the current I1 flows with a discontinuous mode in which the periods when the current I1 does not flow exist. Under an intermediate load condition, the current I1 flows with a critical mode. In a heavy load range, it flows with a continuous mode. This operation mode transition of the current I1 depends on selection of the inductor Lpc. In order to allow an actual circuit to operate compatibly with commercial AC supply inputs of the AC 100 V-system, the inductor Lpc having an inductance of 140 µH is chosen for example. By thus adjusting the current I1 flowing via the inductor Lpc to the smoothing capacitor Ci depending upon the load condition, the rectified and smoothed voltage Ei can be stabilized against level variation of the AC input voltage VAC and load variation. In the circuit of FIG. 19, the rectified and smoothed voltage is kept constant at 380 V for the range of the AC input voltage VAC from 85 V to 264 V. The rectified and smoothed voltage Ei is the voltage across the smoothing capacitor Ci, and is equivalent to the voltage Vout in FIG. 18. The voltage Ei serves as the DC input voltage to the subsequent-stage current resonant converter.

FIG. 21 shows the waveforms of the AC input current IAC and the rectified and smoothed voltage Ei based on a comparison with the AC input voltage VAC. These waveforms in FIG. 21 were obtained as an experimental result when the AC input voltage VAC was 100 V.

As shown in FIG. 21, the AC input current IAC according to the input of the AC input voltage VAC of 100 V has conduction periods that substantially correspond with those of the AC input voltage VAC. That is, power factor improvement is achieved.

In addition to the power factor improvement, stabilization of the rectified and smoothed voltage Ei at an average value of 380 V is also indicated. The waveform of an actual rectified and smoothed voltage Ei includes ripple fluctuation of 10 Vp-p about 380 V as shown in FIG. 21.

The current resonant converter, which is at the subsequent stage of the active filter, is fed with the rectified and smoothed voltage Ei as a DC input voltage and implements switching operation for power conversion. The current resonant converter includes two-transistor switching elements Q1 and Q2 as shown in the drawing. The switching elements Q1 and Q2 are half-bridge connected to each other in such a manner that the switching element Q 1 is on the high side and the switching element Q2 is on the low side. The switching elements Q1 and Q2 are connected in parallel to the rectified and smoothed voltage Ei (DC input voltage). That is, a current resonant converter based on a half-bridge connection system is formed.

This current resonant converter is separately excited, and correspondingly MOS-FETs are used as the switching elements Q1 and Q2. Clamp diodes DD1 and DD2 are connected in parallel to these switching elements Q1 and Q2, respectively, which forms a switching circuit. These clamp diodes DD1 and DD2 form a path of a reverse-direction current when the switching elements Q 1 and Q2 are in the off-state.

The switching elements Q1 and Q2 are switch-driven by an oscillation and drive circuit 2 at a requisite switching frequency so that they are alternately tuned on and off. The oscillation and drive circuit 2 operates to vary the switching frequency based on control executed by a control circuit 1 dependent upon the level of a secondary-side DC output voltage Eo, to thereby stabilize the secondary-side DC output voltage Eo.

An isolation converter transformer PIT is provided in order to transmit the switching output of the switching elements Q1 and Q2 from the primary side to the secondary side.

One end of a primary winding N1 of the isolation converter transformer PIT is coupled via a series resonant capacitor C1 to the connecting node (switching output node) between the switching elements Q1 and Q2, while the other end is connected to the primary-side ground. The capacitance of the series resonant capacitor C1 and the leakage inductance (L1) of the primary winding N1 form a series resonant circuit. This series resonant circuit is supplied with the switching output from the switching elements Q1 and Q2 to thereby implement resonant operation. Thus, current resonant operation is obtained as the operation of the switching circuit formed of the switching elements Q1 and Q2.

A secondary winding N2 is wound on the secondary side of the isolation converter transformer PIT.

The secondary winding N2 is provided with a center tap as shown in the drawing, and this center tap is connected to the secondary-side ground. Furthermore, rectifier diodes Do1 and Do2 and a smoothing capacitor Co are provided to form a double-wave rectifier circuit as shown in the drawing. Thus, the secondary-side DC output voltage Eo is obtained as the voltage across the smoothing capacitor Co. The secondary-side DC output voltage Eo is supplied to a load (not shown), and is branched and input to the control circuit 1 as a detected voltage therefore. The control circuit 1 supplies to the oscillation and drive circuit 2 a control signal dependent upon the level of the input secondary-side DC output voltage Eo. The oscillation and drive circuit 2 drives the switching elements Q1 and Q2 with varying the switching frequency so that the secondary-side DC output voltage Eo is stabilized according to the control signal. That is, stabilization based on a switching frequency control system is carried out.

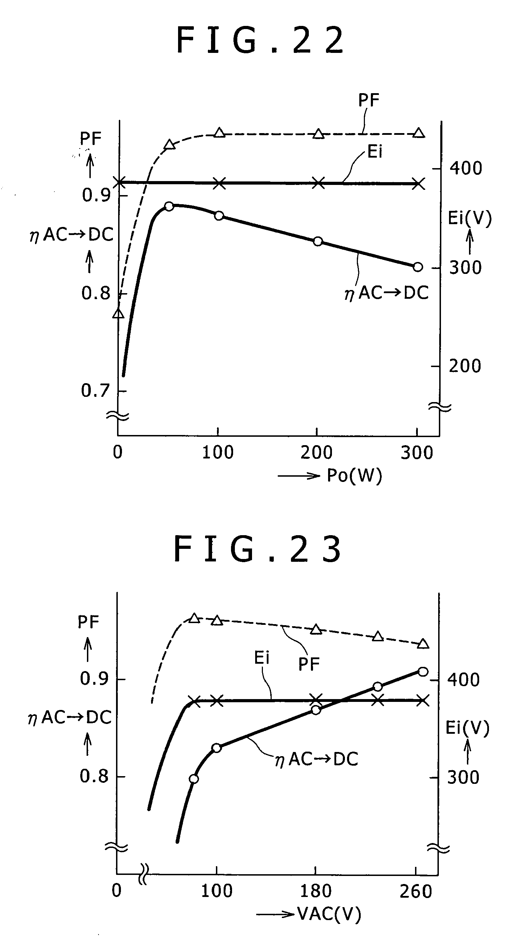

FIG. 22 shows the characteristics of the AC to DC power conversion efficiency (total efficiency), the power factor and the rectified and smoothed voltage Ei, as functions of load. This diagram shows characteristics associated with variation of the load power Po from 300 W to 0 W when the AC input voltage VAC is 100 V (AC 100 V-system). FIG. 23 shows the characteristics of the AC to DC power conversion efficiency (total efficiency), the power factor and the rectified and smoothed voltage Ei, as functions of the AC input voltage VAC. This diagram shows characteristics associated with variation of the AC input voltage VAC from 85 V to 264 V under a constant load condition of the load power Po of 300 W.

Referring initially to FIG. 22, the AC to DC power conversion efficiency (ηAC→DC) decreases as the load power Po becomes higher. In contrast, when the AC input voltage VAC is varied under the same load condition, the efficiency ηAC→DC has a tendency of increasing as the level of the AC input voltage VAC becomes higher as shown in FIG. 23.

The following experimental results were obtained from an actual circuit under the load condition of the load power Po of 300 W: ηAC→DC was about 83.0% when the AC input voltage VAC was 100 V; and ηAC→DC was about 89.0% when it was 230 V.

Turning back to FIG. 22, the power factor PF shows a characteristic of being almost constant against variation of the load power Po. Furthermore, as shown in FIG. 23, the power factor PF may also be regarded as almost constant against variation of the AC input voltage VAC although it has a tendency of slightly decreasing as the voltage VAC becomes higher.

The following experimental results were obtained from an actual circuit under the load condition of the load power Po of 300 W: the power factor PF was about 0.96 when the AC input voltage VAC was 100 V; and the power factor PF was about 0.94 when the AC input voltage VAC was 230 V.

As for the rectified and smoothed voltage Ei, constancy is exhibited both against variation of the load power Po and against variation of the AC input voltage VAC as shown in FIGS. 22 and 23.

As is apparent from the above description, the power supply circuit in FIG. 19 is provided with an active filter which has been known in the past, shown in FIGS. 16 and 17. Power factor improvement is intended through the adoption of such a configuration.

However, the power supply circuit with the configuration of FIG. 19 involves the following problems.

Specifically, the power conversion efficiency of the power supply circuit in FIG. 19 is obtained as a result of synthesis between the AC to DC power conversion efficiency of the former-stage active filter and the DC to DC power conversion efficiency of the latter-stage current resonant converter also as shown in FIG. 19.

That is, the total power conversion efficiency of the circuit in FIG. 19 results from multiplication of these power conversion efficiencies, and correspondingly tends to be a low value.

According to an experiment on the circuit of FIG. 19, the AC to DC power conversion efficiency ηAC→DC of the part corresponding to the active filter was about 88.5% when the AC input voltage VAC was 100 V, and was about 95% when it was 230 V. In addition, the DC to DC power conversion efficiency ηDC→DC of the current resonant converter side was about 94% when the load power Po was 300 W and the rectified and smoothed voltage Ei was 380 V.

Accordingly, also as described above, the total AC to DC power conversion efficiency of the circuit in FIG. 19 was decreased to about 83.0% when the AC input voltage VAC was 100 V, and was decreased to about 89.0% when it was 230 V.

Furthermore, since the active filter circuit implements hard-switching operation, the degree of noise generation is significantly high, which needs measures for suppression of comparatively severe noise.

Therefore, in the circuit shown in FIG 19, a noise filter formed of two line-filter transformers and three across-line capacitors is provided for the lines of the commercial alternating-current power supply AC. That is, at least two stages of filters are used.

In addition, the rectified output line is provided with a normal mode noise filter made up of one choke coil LN and two filter capacitors CN. Moreover, an RC snubber circuit is provided for the fast-recovery diode D20 for rectification.

In this manner, an actual circuit needs to be provided with anti-noise measures formed with a significantly large number of components, which results in a cost increase and a larger mounting area of the power supply circuit board.

Furthermore, the switching frequency of the switching element Q3 operated by the power-factor/output-voltage control IC 120 as a general-purpose IC is fixed at 60 kHz, while the switching frequency of the subsequent-stage current resonant converter varies in the range from 80 kHz to 200 kHz. Since the switching timings of the both switching elements are thus independent of each other, the primary-side ground potentials interfere with each other due to the switching operation of the both elements and therefore become unstable, which readily causes abnormal oscillation for example. This causes problems such as difficulty in circuit design and deterioration of the reliability.

In consideration of the above-described problems, one embodiment of the present invention provides a switching power supply circuit having the following configuration.

Specifically, the switching power supply circuit includes a rectifying and smoothing unit that is supplied with an AC voltage and produces a rectified and smoothed voltage, a switching unit including a switching element that is supplied with the rectified and smoothed voltage as a DC input voltage and implements switching, and a switching drive unit that switch-drives the switching element.

The switching power supply circuit also includes an isolation converter transformer that includes at least a primary winding and a secondary winding that are wound therein. The primary winding is supplied with a switching output arising from the switching operation of the switching unit. The switching output obtained in the primary winding induces an alternating voltage in the secondary winding. The isolation converter transformer has a structure with such a coupling coefficient between the primary side and the secondary side of the isolation converter transformer that adequate zero voltage switching is ensured even in a range of certain load conditions regarded as an intermediate load condition.

In, the switching power supply circuit further includes a primary-side parallel resonant circuit that is formed of at least a leakage inductance component including the primary winding of the isolation converter transformer and the capacitance of a primary-side parallel resonant capacitor. The primary-side parallel resonant circuit offers voltage resonant operation as operation of the switching unit.

Moreover, the switching power supply circuit also includes a secondary-side series resonant circuit that arises from connecting of a secondary-side series resonant capacitor in series to the secondary winding of the isolation converter transformer, and is formed of a leakage inductance component including the secondary winding and the capacitance of the secondary-side series resonant capacitor.

Furthermore, the switching power supply circuit also includes a secondary-side DC output voltage producing unit that is supplied with the alternating voltage induced in the secondary winding of the isolation converter transformer, and implements rectifying operation to thereby produce a secondary-side DC output voltage.

In addition, the switching power supply circuit further includes a power factor improvement unit that implements at least operation, as operation of feeding back the switching output, in which a switching output current that arises in the primary winding due to the switching operation of the switching unit is regenerated as power and is fed back to the smoothing capacitor forming the rectifying and smoothing unit. The power factor improvement unit intermittently blocks, by use of a power factor improvement switching element, a rectified current that arises from the rectifying operation of the rectifying and smoothing unit in response to the fed back switching output.

The term coupling coefficient in the present specification indicates the degree of electromagnetic coupling. The coefficient of 1 corresponds to the highest coupling degree, while the coefficient of 0 corresponds to the lowest coupling degree (noncoupled state).

The power supply circuit with the above-described configuration according to one embodiment of the present invention employs a basic configuration as a switching converter that includes a primary-side voltage resonant converter and a secondary-side series resonant circuit. In addition, in order to achieve power factor improvement, a current (switching output current) obtained in the primary winding of the isolation converter transformer in response to the switching output of the switching element is regenerated as power and is fed back to the rectified current path (smoothing capacitor for producing a rectified and smoothed voltage), and the power factor improvement switching element implements switching for the rectified current due to the fed-back voltage.

This configuration eliminates the need to provide an active filter for stabilizing a DC input voltage to a switching converter in order to construct a power supply circuit including a power factor improvement circuit.

As described above, a switching power supply circuit according to one embodiment of the present invention can serve as a switching power supply circuit having a power factor improvement function without an active filter. The absence of the active filter enhances the power conversion efficiency characteristic of the switching power supply circuit. This leads to e.g. elimination or miniaturization of a heat sink and so on. In addition, the number of components is greatly reduced compared with a configuration including an active filter, which allows a reduction in the size and weight of the circuit and a cost decrease. Moreover, contrary to hard-switching operation of an active filter, a switching converter of one embodiment of the invention implements soft-switching operation since it is based on a voltage resonant converter. This significantly reduces switching noise and thus eliminates the need to reinforce noise filters, which also contributes to the size and weight reduction and cost decrease.

Furthermore, according to the configuration of one embodiment of the invention, simultaneous operation with different switching frequencies is absent, and thus the problem of interference between the ground potentials of the primary and secondary sides is eliminated. Therefore, the ground potentials are stabilized, which enhances the reliability and facilitates pattern design of a circuit board.

Preferably, the switching circuit serves as a power supply included in various electronic apparatuses.

Various respective aspects and features of the invention are defined in the appended claims. Features from the dependent claims may be combined with features of the independent claims as appropriate and not merely as explicitly set out in the claims.

The invention will now be described by way of example with reference to the accompanying drawings, throughout which like parts are referred to by like references, and in which:
FIG. 1 is a circuit diagram illustrating a configuration example of a switching power supply circuit according to a first embodiment of the invention;
FIG. 2 is a sectional view illustrating a structural example of an isolation converter transformer included in the switching power supply circuit of an embodiment of the invention;
FIG. 3 is a waveform diagram showing the operation of major parts in the power supply circuit of the first embodiment based on a commercial AC voltage cycle;
FIG. 4 is a diagram showing the characteristics of the rectified and smoothed voltage, the power factor, and the AC to DC power conversion efficiency associated with load variation, of the power supply circuit of the first embodiment;
FIG. 5 is a diagram showing the characteristics of the rectified and smoothed voltage, the power factor, and the AC to DC power conversion efficiency associated with AC input voltage variation, of the power supply circuit of the first embodiment;
FIG. 6 is a circuit diagram illustrating a configuration example of a switching power supply circuit according to a second embodiment of the invention;
FIG. 7 is a circuit diagram illustrating a configuration example of a switching power supply circuit according to a third embodiment of the invention;
FIG. 8 is a circuit diagram illustrating a configuration example of a switching power supply circuit according to a fourth embodiment of the invention;
FIG. 9 is a circuit diagram illustrating a configuration example of a switching power supply circuit according to a fifth embodiment of the invention;
FIG. 10 is a structural diagram of a high-frequency choke coil used in the fifth embodiment and a sixth embodiment of the invention;
FIG. 11 is a diagram showing the characteristics of the rectified and smoothed voltage, the power factor, and the AC to DC power conversion efficiency associated with load variation, of the power supply circuit of the fifth embodiment;
FIG. 12 is a diagram showing the characteristics of the rectified and smoothed voltage, the power factor, and the AC to DC power conversion efficiency associated with AC input voltage variation, of the power supply circuit of the fifth embodiment;
FIG. 13 is a circuit diagram illustrating a configuration example of a switching power supply circuit according to the sixth embodiment;
FIG. 14 is a circuit diagram illustrating a configuration example of a voltage feedback system as a modification of the power supply circuit of the embodiments;
FIG. 15 is a circuit diagram illustrating a configuration example of another voltage feedback system as a modification of the power supply circuit of the embodiments;
FIG. 16 is a circuit diagram illustrating the basic circuit configuration of an active filter;
FIGS. 17A to 17D are waveform diagrams showing the operation of the active filter shown in FIG. 16;
FIG. 18 is a circuit diagram illustrating the configuration of control circuitry for the active filter;
FIG. 19 is a circuit diagram illustrating a configuration example of a related power supply circuit incorporating the active filter;
FIGS. 20A to 20C are waveform diagrams showing the switching operation of a switching element and a current flowing to an inductor in a power choke coil in the power supply circuit of FIG. 19;
FIG. 21 is a waveform diagram showing the waveforms of the AC input voltage, the AC input current and the rectified and smoothed voltage in the power supply circuit of FIG. 19 obtained when an AC input voltage is 100 V;
FIG. 22 is a characteristic diagram showing the characteristics of the power conversion efficiency, the power factor and the rectified and smoothed voltage associated with load variation, of the power supply circuit in FIG. 19; and
FIG. 23 is a characteristic diagram showing the characteristics of the power conversion efficiency, the power factor and the rectified and smoothed voltage associated with AC input voltage variation, of the power supply circuit in FIG. 19.

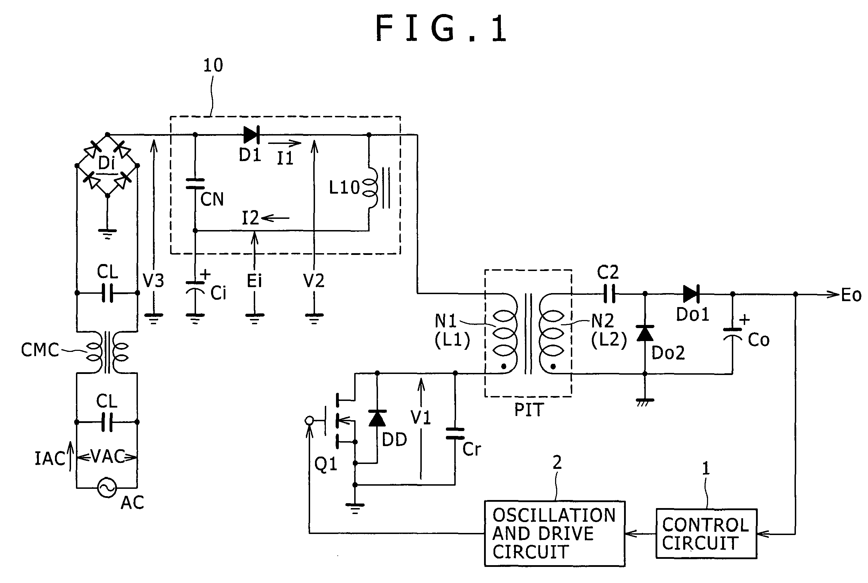

FIG. 1 is a circuit diagram illustrating a configuration example of a switching power supply circuit according to, of best modes (hereinafter, referred to also as embodiments) for carrying out the present invention, a first embodiment. The power supply circuit in FIG. 1 includes a single-ended voltage resonant switching converter as its basic configuration.

In the switching power supply circuit in FIG. 1, the lines of a commercial alternating-current power supply AC are provided with one common mode choke coil CMC and two across-line capacitors CL. The common mode choke coil CMC and the across-line capacitors CL, CL form a noise filter that removes common mode noise superimposed on the lines of the commercial power supply AC.

An AC input voltage VAC is rectified by a bridge rectifier circuit Di that is formed by bridge-connecting four low-speed rectifier elements (diodes), and the rectified output is charged in a smoothing capacitor Ci. Thus, a rectified and smoothed voltage Ei is obtained as the voltage across the smoothing capacitor Ci. The rectified and smoothed voltage Ei has the same level as that of the AC input voltage VAC. The rectified and smoothed voltage Ei serves as a DC input voltage for the switching converter at the subsequent stage.

In the present embodiment, a power factor improvement circuit 10 is provided to intervene on the line between the positive output terminal of the bridge rectifier circuit Di and the positive electrode of the smoothing capacitor Ci. The configuration and operation of the power factor improvement circuit 10 will be described later.

In FIG. 1, the switching converter that is fed with the rectified and smoothed voltage Ei as a DC input voltage and implements switching operation is formed as a single-ended voltage resonant converter that includes e.g., one-transistor switching element Q1. In the present embodiment, a high-breakdown-voltage MOS-FET is selected as the switching element Q1. The voltage resonant converter in the present embodiment is driven based on a separate excitation system in which the oscillation and drive circuit 2 switch-drives the switching element.

Applied to the gate of the switching element Q1 is a switching drive signal (voltage) output from the oscillation and drive circuit 2.

The drain of the switching element Q1 is coupled to the winding-start end of a primary winding N1 in an isolation converter transformer PIT to be described later. The winding-finish end of the primary winding N1 is coupled to the positive electrode of the smoothing capacitor Ci via a high-frequency choke coil L10 to be described later in the power factor improvement circuit 10. That is, in the present embodiment, the DC input voltage (Ei) is supplied to the switching element Q1 via the primary winding N1 connected in series thereto. The source of the switching element Q1 is coupled to the primary-side ground.

Since a MOS-FET is chosen as the switching element Q1, the switching element Q 1 incorporates a body diode DD so that the diode DD is connected in parallel to the channel between the source and drain of the switching element Q 1 as shown in the drawing. The anode of the body diode DD is connected to the source of the switching element Q1, and the cathode thereof is connected to the drain of the switching element Q1. The body diode DD forms the path of a switching current in the reverse direction, arising due to the ON/OFF operation (switching operation) of the switching element Q1.

In addition, a primary-side parallel resonant capacitor Cr is connected in parallel to the channel between the drain and source of the switching element Q1.

The capacitance of the primary-side parallel resonant capacitor Cr and the leakage inductance L1 of the primary winding N1 in the isolation converter transformer PIT form a primary-side parallel resonant circuit (voltage resonant circuit) for the switching current flowing through the switching element Q1. The resonant operation of this primary-side parallel resonant circuit offers voltage resonant operation as the switching operation of the switching element Q1. Due to this operation, a voltage V1 across the switching element Q1 (voltage between the drain and source) has a sinusoidal resonant pulse voltage waveform during the OFF period of the switching element Q1.

In order to drive the switching element Q 1 by separate excitation for example, the oscillation and drive circuit 2 produces a drive signal that is a gate voltage for switch-driving the MOS-FET based on an oscillation circuit and an oscillation signal obtained due to the oscillation circuit, and applies the drive signal to the gate of the switching element Q1. Thus, the switching element Q1 continuously implements ON/OFF operation with a switching frequency dependent upon the cycle of the drive signal. That is, the switching element Q1 implements switching operation.

The isolation converter transformer PIT transmits the switching output from the primary-side switching converter to the secondary side, with isolating the primary side from the secondary side in terms of DC transmission therebetween.

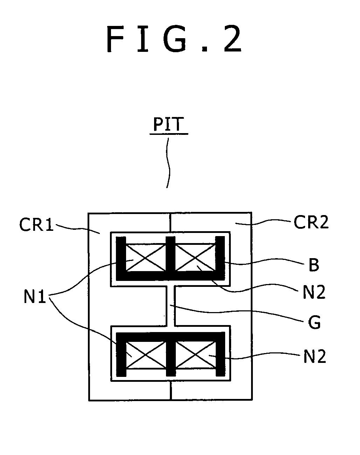

FIG. 2 is a sectional view illustrating a structural example of the isolation converter transformer PIT included in the power supply circuit of FIG. 1.

As shown in FIG. 2, the isolation converter transformer PIT includes an EE-core (EE-shaped core) formed by combining E-shaped cores CR1 and CR2 made of a ferrite material in such a manner that their magnetic legs face each other.

Furthermore, a bobbin B is provided that is formed of resin or the like and has such a divided shape that winding parts on the primary side and secondary side are independent of each other. The primary winding N1 is wound around one winding part of the bobbin B. The secondary winding N2 is wound around the other winding part.

The bobbin B around which the primary-side and secondary-side windings have been thus wound is fitted to the EE-shaped core (CR1, CR2), which results in the state in which the primary-side and secondary-side windings on different winding regions are wound around the center leg of the EE-shaped core. In this manner, the entire structure of the isolation converter transformer PIT is completed.

In the center leg of the EE-shaped core, a gap G having a gap length of e.g., about 1.6 mm or more is formed as shown in the drawing. Thus, a loose coupling state in which a coupling coefficient k is e.g., about 0.75 is obtained. That is, the degree of loose coupling is higher in the isolation converter transformer PIT in FIG. 1, compared with that in the power supply circuit shown in FIG. 19 as a related technique. The gap G can be formed by setting the center legs of the E-shaped cores CR1 and CR2 to be shorter than the respective two outer legs thereof.

As described above, one end of the primary winding N1 in the isolation converter transformer PIT is connected to the drain of the switching element Q1. Thus, the switching output from the switching element Q1 is transmitted to the primary winding N1, and therefore an alternating voltage arises in the primary winding N1.

On the secondary side of the isolation converter transformer PIT, an alternating voltage induced by the primary winding N1 is generated in the secondary winding N2.

Connected in series to the secondary winding N2 is a secondary-side series resonant capacitor C2. Thus, the leakage inductance L2 of the secondary winding N2 and the capacitance of the secondary-side series resonant capacitor C2 form a secondary-side series resonant circuit. This secondary-side series resonant circuit implements resonant operation in association with the rectifying operation of a secondary-side rectifier circuit to be described later. Thus, a secondary winding current flowing through the secondary winding N2 has a sinusoidal waveform. That is, current resonant operation is achieved on the secondary side.

The secondary-side rectifier circuit in the present embodiment is formed as a voltage-doubler half-wave rectifier circuit by coupling two rectifier diodes Do1 and Do2 and one smoothing capacitor Co to the secondary winding N2, to which the secondary-side series resonant capacitor C2 is connected in series as described above. The connecting structure of the voltage-doubler half-wave rectifier circuit is as follows. The winding-finish end of the secondary winding N2 is coupled via the secondary-side series resonant capacitor C2 to the anode of the rectifier diode Do 1 and the cathode of the rectifier diode Do2. The cathode of the rectifier diode Do 1 is connected to the positive electrode of the smoothing capacitor Co. Connected to the secondary-side ground are the winding-start end of the secondary winding N2, the anode of the rectifier diode Do2, and the negative electrode of the smoothing capacitor Co.

The rectifying operation of the thus formed voltage-doubler half-wave rectifier circuit is as follows.

In the periods of half cycles corresponding to one polarity of an alternating voltage obtained in the secondary winding, a forward voltage is applied to the rectifier diode Do2 and thus the rectifier diode Do2 conducts, which offers operation of charging the secondary-side series resonant capacitor C2 with the rectified current. Thus, generated across the secondary-side series resonant capacitor C2 is the voltage with the same level as that of the alternating voltage induced in the secondary winding N2. In the periods of half cycles corresponding to the other polarity of the alternating voltage obtained in the secondary winding, the rectifier diode Do1 is provided with a forward voltage and thus conducts. The smoothing capacitor Co is then charged by the potential resulting from superposition of the secondary winding voltage and the voltage across the secondary-side series resonant capacitor C2.

Thus, generated across the smoothing capacitor Co is a secondary-side DC output voltage Eo having the level equal to twice the level of the alternating voltage induced in the secondary winding N2. In this rectifying operation, the charging of the smoothing capacitor Co is implemented in the periods of half cycles of one polarity of the alternating voltage excited in the secondary winding N2. That is, rectifying operation as voltage-doubling half-wave rectifying is achieved.

This secondary-side DC output voltage Eo is supplied to a load. In addition, the voltage Eo is branched and output to a control circuit 1 as a detected voltage.

The control circuit 1 supplies to the oscillation and drive circuit 2 a detection output dependent upon a level change of the input secondary-side DC output voltage Eo. The oscillation and drive circuit 2 drives the switching element Q1, with varying the switching frequency or the time ratio between the periods TON and TOFF (conduction angle) within one switching cycle according to the detection output input from the control circuit 1. This operation serves as constant-voltage control operation for the secondary-side DC output voltage.

In the basic constant-voltage control operation of a voltage resonant converter, the ON period TON of the switching element Q1 is varied while the OFF period TOFF thereof is kept constant, to thereby vary the switching frequency. However, if the voltage resonant converter includes a secondary-side series resonant circuit like the present embodiment, another constant-voltage control operation as PWM control operation in which the conduction angle in one switching cycle is controlled is also implemented as described above. That is, as a whole of the constant-voltage control operation, complex control including the switching frequency control and PWM control is conducted.

This variation control of switching frequency and conduction angle of the switching element Q1 leads to changes of resonant impedances of the primary and secondary sides and the power transmission effective period, in the power supply circuit. These changes result in a change of the amount of power transmitted from the primary winding N 1 to the secondary winding N2 in the isolation converter transformer PIT, and in a change of the amount of power that should be supplied from the secondary-side rectifier circuit to a load. Thus, the level of the secondary-side DC output voltage Eo is controlled so that the level variation thereof is cancelled. That is, stabilization of the secondary-side DC output voltage Eo is provided.

A description will be made below on the power factor improvement circuit 10.

The power factor improvement circuit 10 is provided in the middle of the rectified current path in a rectifying and smoothing circuit for producing a DC input voltage (Ei) from the AC input voltage VAC, and employs a configuration for improving the power factor by use of a power regenerative system based on magnetic coupling.

In the power factor improvement circuit 10, the anode of a fast-recovery switching diode D1 (power factor improvement switching element) is connected to the positive output terminal of the bridge rectifier circuit Di. The cathode of the switching diode D 1 is connected in series to the high-frequency choke coil L10, and is coupled to the positive electrode of the smoothing capacitor Ci via the choke coil L10. That is, a series circuit of the switching diode D1 (anode to cathode) and the high-frequency choke coil L10 is provided between the positive output terminal of the bridge rectifier circuit Di and the positive electrode of the smoothing capacitor Ci.

Furthermore, a filter capacitor CN is connected in parallel to the series circuit of the switching diode D1 and the high-frequency choke coil L10. The filter capacitor CN is to suppress normal mode noise.

In addition, one end of the primary winding N1 (winding-finish end, in this embodiment) is coupled to the connecting node between the high-frequency choke coil L10 and the cathode of the switching diode D1. This connecting node serves as a switching output feedback node in this embodiment.

This circuit configuration of the power factor improvement circuit 10 offers the following operation. Specifically, a switching output current that arises in the primary winding N1 in response to the switching operation of the switching element Q1 (primary-side parallel resonant current arising due to the resonant operation of the primary-side parallel resonant circuit) is regenerated as power and is fed back to the smoothing capacitor Ci through magnetic coupling obtained due to the high-frequency choke coil L10.

Thus, e.g., the voltage between the connecting node of the primary winding N1 and the power factor improvement circuit 10 and the primary-side ground has the waveform resulting from superposition of an alternating voltage component with the switching cycle on the rectified and smoothed voltage Ei. Due to application of this alternating voltage component superimposed on the rectified and smoothed voltage Ei to the fast-recovery switching diode D1, the diode D1 implements switching operation when the absolute value of positive/negative level of the AC input voltage VAC is larger than about half of its peak value for example, to thereby intermittently block the rectified current directed toward the smoothing capacitor Ci.

The conduction period of envelope of the thus flowing rectified current is such that the current flows also during the periods when the level of the rectified output voltage from the bridge rectifier circuit Di is lower than that of the voltage across the smoothing capacitor Ci. In addition, the conduction period of the AC input current IAC that flows based on the AC input voltage VAC substantially corresponds with the conduction period of this rectified current. Specifically, the conduction angle of the AC input current IAC is increased compared with a configuration including no power factor improvement circuit, and the waveform of the AC input current IAC is brought close to that of the AC input voltage VAC. That is, power factor improvement is achieved.

For an experiment on an actual power supply circuit with the above-described configuration of FIG. 1, major parts in the circuit were chosen to have the following parameters, so that experimental results to be described later were obtained.

The isolation converter transformer PIT was based on the structure shown in FIG. 2, and an EER-35 core was chosen for the EE-shaped core (CR1, CR2). The gap G1 was designed to have a gap length of 2.2 mm. The numbers of turns of the primary and secondary windings N1 and N2 were set to 38 T and 30 T, respectively. According to the structure of this isolation converter transformer PIT, the coupling coefficient k between the primary and secondary sides in the isolation converter transformer PIT was set to 0.67.

For the high-frequency choke coil L10, an EE-22 core was chosen and a gap of 1.4 mm was formed, so that the inductance L10 was set to 27 µH.

As is well known, the above-described EER and EE cores are one of types and standards of product cores. It is known that the types also include an ER type. The sectional shapes of cores of all the EER, ER and EE types are an E-character shape or EE-character shape. Therefore, cores of all the EER, ER and EE types are treated as the E-shaped core and EE-shaped core in the present specification.

The capacitances of the primary-side parallel resonant capacitor Cr, the filter capacitor CN and the secondary-side series resonant capacitor C2 were chosen as follows: Cr = 7500 pF, CN = 1 µF, and C2 = 0.047 µF.

The allowable load power range was from the maximum load power Pomax of 300 W to the minimum load power Pomin of 0 W (no load). The rated level of the secondary-side DC output voltage Eo was 175 V.

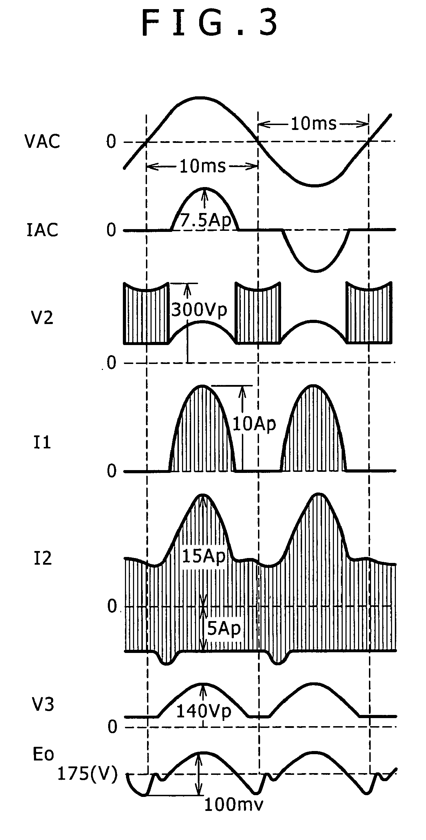

The experimental results on the power supply circuit of FIG. 1 are shown in the waveform diagram of FIG. 3. FIG. 3 shows the operation of major parts in the power supply circuit with the configuration of FIG. 1 based on the cycle of the commercial AC supply voltage.

A current I1 is the current flowing from the switching diode D1 to the high-frequency choke coil L10 in the power factor improvement circuit 10. As shown in FIG. 3, the current I1 is an alternating current that has the switching cycle (switching cycle of the switch element Q1) and flows with a half sinewave envelope during the periods when the absolute value of level of the AC input voltage VAC is larger than a certain value. The reason why the current I1 is an alternating current is that an alternating voltage is superimposed on the rectified and smoothed voltage in response to feedback of the switching output current as a current to the switching output feedback node, and this superimposed component causes the switching diode D1 to implement switching for the rectified current.

A current I2 flowing into the smoothing capacitor Ci is an alternating current that has the switching cycle and flows with the illustrated waveform. The current I2 results from synthesis of the current I1 and the primary winding current obtained in the primary winding N1 and subsequent passage of the synthesized current through the high-frequency choke coil L10.

A voltage V2 is the voltage between the primary-side ground and the connecting node of the switching diode D1 and the high-frequency choke coil L10, which is the switching output feedback node. As shown in FIG. 3, the voltage V2 has a waveform in which an alternating waveform with the switching cycle is superimposed on the rectified output voltage from the bridge rectifier circuit Di having the certain AC supply voltage cycle in the periods that substantially correspond with the nonconducting periods of the current I1. Due to the turning ON/OFF of the switching diode D 1 with the switching cycle, the alternating waveform component does not appear in the voltage V2 during the conducting periods of the current I1.

A high-frequency signal is not superimposed on a voltage V3 of the output terminal of the bridge rectifier circuit Di because of the operation of the filter capacitor CN.

The AC input current IAC has the illustrated waveform, which includes half sinewaves that arise in the conducting periods of the current I1 and have opposite polarities corresponding to the polarity of the AC input voltage VAC. This waveform includes an increased conduction angle compared with e.g. the configuration obtained by eliminating the power factor improvement circuit 10 from the circuit of FIG. 1, and thus achieves corresponding power factor improvement.

FIG. 3 also shows the secondary-side DC output voltage Eo. The average value of the secondary-side DC output voltage Eo is the rated level as the stabilization target (175 V), and a ripple with the cycle that is half the commercial AC supply voltage cycle is superimposed on the secondary-side DC output voltage Eo. The voltage level of the ripple is 100 mVp-p.

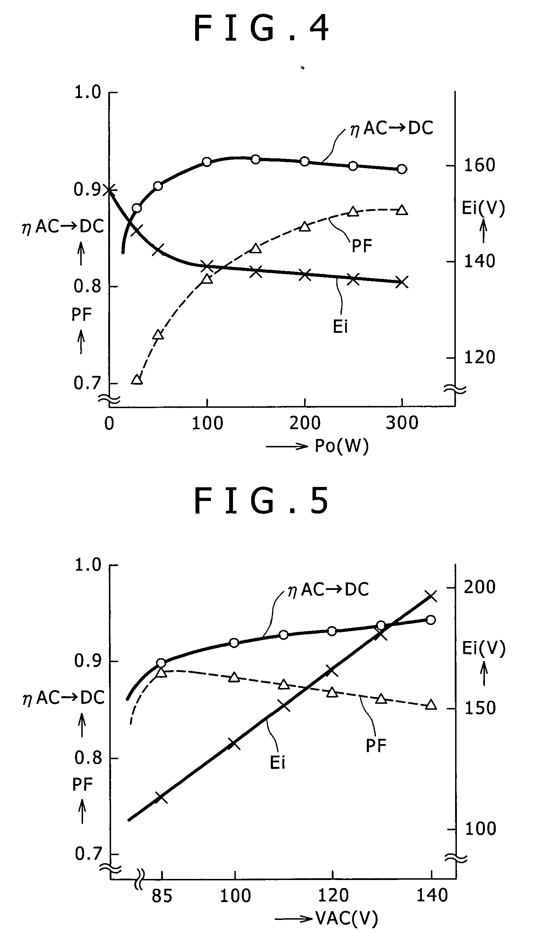

FIG. 4 shows, as the experimental results on the power supply circuit of FIG. 1, the rectified and smoothed voltage (DC input voltage) Ei, the power factor (PF) and the AC to DC power conversion efficiency (ηAC→DC) associated with load variation in the range from the maximum load power Pomax of 300 W to the minimum load power Pomin of 0 W (no load) under the input voltage condition of the AC input voltage VAC of 100 V.

In addition, FIG. 5 shows, as the experimental results on the power supply circuit of FIG. 1, the rectified and smoothed voltage (DC input voltage) Ei, the power factor (PF) and the AC to DC power conversion efficiency (ηAC→DC) associated with variation of the AC input voltage VAC in the range from 85 V to 144 V under the constant load condition of the maximum load power Pomax of 300 W.

The rectified and smoothed voltage Ei, which is the DC input voltage for the switching converter, changes depending upon the AC input voltage VAC as shown in FIG. 5. For load variation, as shown in FIG. 4, the rectified and smoothed voltage Ei tends to increase as the load becomes lighter, and varies within the range from 130 V to 140 V when the load power Po is higher than 100 W. In addition, the measurement shows that the rectified and smoothed voltage Ei has a variation width (ΔEo) of 23.0 V for the range of the load power Po from 300 W to 0W. Therefore, the variation amount ΔEo associated with the load variation is favorably suppressed.

The power factor PF, which depends on the operation of the power factor improvement circuit 10, has a tendency of increasing as the load becomes heavier as shown in FIG. 4. The measured characteristic of the power factor PF against load variation is as follows: PF is larger than 0.75 for the variation range of the load power Po from 300 W to 50 W, and PF is 0.88 when the load power is the maximum load power Pomax of 300 W. Therefore, it can be said that the power factor sufficient for practical use is achieved. For variation of the AC input voltage VAC, the power factor PF shows a characteristic of decreasing with a gentle slope as the AC input voltage VAC becomes higher as shown in FIG. 5.

As for the AC to DC power conversion efficiency (ηAC→DC), as shown in FIGS. 4 and 5, it is almost constant against load variation, while for AC input voltage variation the AC to DC power conversion efficiency (ηAC→DC) increases with a gentle slope as the AC input voltage VAC becomes higher. As a result of the measurement, the efficiency ηAC→DC was 92.3% under the condition of the maximum load power Pomax of 300 W and the AC input voltage VAC of 100 V. As a comparison, the AC to DC power conversion efficiency of the power supply circuit in FIG. 19 is 83% under the same condition (300 W, 100 V), and therefore the circuit of FIG. 1 achieves an improvement of about 9.3%. In addition, along with this, the AC input power in the present embodiment is reduced by about 36.5 W compared with that in the power supply circuit of FIG. 19.

The following discussion is based on a comparison between the above-described power supply circuit according to the embodiment and the power supply circuit in FIG. 19, which is a related art that includes an active filter for achieving power factor improvement.

Initially, as is apparent also from the description of the experimental results shown in FIGS. 4 and 5, the power supply circuit in FIG. 1 has an improved power conversion efficiency (ηAC→DC) than the power supply circuit of FIG. 19.

This improvement is due mainly to the configuration that includes a power factor improvement circuit based on a power regenerative system and therefore eliminates the need to include an active filter. That is, unlike the configuration with an active filter, the present embodiment does not involve lowering of the total efficiency due to multiplication of two power conversion efficiencies of the former and latter stages.

Furthermore, since the circuit in FIG. 1 does not need to include an active filter, the circuit is allowed to include the reduced number of circuit component parts.

Specifically, an active filter involves the formation of one converter, and hence is constructed of a large number of components such as one switching element and an IC for driving the switching element, as is apparent from the description for FIG. 19.

On the contrary, it is sufficient for the power supply circuit in FIG. 1 to include at least the filter capacitor CN, the switching diode D1 and the high-frequency choke coil L10 as additional components necessary for power factor improvement. Therefore, the number of components is greatly smaller compared with an active filter.

Thus, the power supply circuit in FIG. 1 can be achieved as a power supply circuit with a function of power factor improvement at far lower cost than the circuit of FIG. 19. In addition, the great decrease in the number of parts allows an effective reduction in the size and weight of the circuit board. The component as an inductor such as the high-frequency choke coil L10 is categorized into a large component in particular. However, in the present embodiment, the inductance that can be set for the high-frequency choke coil L10 is as small as 27 µH, which allows the use of a small core such as EE-22 for the coil L10 as described above. This does not preclude the reduction in the size and weight of the circuit board. In contrast, e.g. the power choke coil PCC shown in FIG. 19 has an inductance of about 140 µH, and therefore EER-35, which is larger than EE-22, is chosen.

Moreover, in the power supply circuit in FIG. 1, the operation of the resonant converter and the power factor improvement circuit 10 is so-called soft-switching operation. Therefore, the switching noise level is greatly reduced compared with the active filter in FIG. 19.

Accordingly, even provision of e.g. a one-stage noise filter formed of a pair of common mode choke coils CMC and two across-line capacitors CL, shown in FIG. 1, can meet the electromagnetic interference regulations sufficiently. In addition, the measure against normal mode noise in the rectified output line is implemented by provision of one filter capacitor CN as shown in FIG. 1.

This reduced number of components for noise filters also promotes a cost decrease of the power supply circuit and a reduction in the size and weight of the circuit board.

Furthermore, in the power supply circuit of FIG. 1, the switching element that forms the primary-side switching converter is a one-transistor element, and the rectifier diodes on the secondary side and so on implement switching operation in sync with the switching element Q1. Therefore, unlike in the power supply circuit in FIG. 19, the primary-side ground potential on the active filter side and that on the subsequent-stage switching converter side do not interfere with each other but can be stabilized irrespective of changes of the switching frequency.

The power factor PF obtained in the power supply circuit in FIG. 1 is as described above with reference to FIGS. 4 and 5. Such a power factor characteristic allows the circuit to meet the power supply harmonic distortion regulations for example, and offers the value that is sufficient for practical use.

As described above, the power supply circuit of the present embodiment shown in FIG. 1 achieves a power factor corrected power supply that solves various problems involved by a power supply circuit with an active filter.

The power supply circuit of the present embodiment includes on its primary side a single-ended voltage resonant converter as its basic configuration.

It is typically considered that a power supply circuit including a voltage resonant converter on its primary side may not be put into practical use as it stands, since it has a narrow allowable range of load power and may not maintain Zero Voltage Switching (ZVS) operation when the load is light. The present inventor therefore has made an experiment on a power supply circuit in which a secondary-side series resonant circuit is provided for a primary-side voltage resonant converter and a voltage-doubler half-wave rectifier circuit is formed as a secondary-side rectifier circuit. The power supply circuit as the experimental target had a circuit configuration obtained by eliminating the power factor improvement circuit 10 from the power supply circuit in FIG. 1 and then connecting the winding-finish end of the primary winding N1 to the positive electrode of the smoothing capacitor Ci.

The isolation converter transformer PIT in this circuit basically had the same structure as that in FIG. 2. The gap G was designed to have a gap length of 1 mm, so that the coupling coefficient k was set to 0.81. As a result of the experiment on the thus constructed power supply circuit, it has been confirmed that this circuit has characteristics bringing the circuit closer to realization than related power supply circuits with a voltage resonant converter.

However, it has been confirmed that this power supply circuit as the experimental target involves abnormal operation when the load is an intermediate load. Specifically, when the load is an intermediate load, a current flows through the switching element Q1 in the positive direction (from the drain to the source) before the end of the OFF period (TOFF) of the switching element Q1, and thus ZVS operation fails to be achieved. Accordingly, it is still difficult to put the circuit into practical use, even with the configuration of the power supply circuit as the experimental target.

On the contrary, as for the power supply circuit of the present embodiment shown in FIG. 1, it has been confirmed due to an experiment that abnormal operation of failing to ensure ZVS associated with an intermediate load is eliminated and normal switching operation is achieved over the entire certain range of allowable load power (Po: 300 W to 0 W). That is, practical use of the power supply circuit of the present embodiment is allowed as a single-ended voltage resonant converter including a secondary-side series resonant circuit.

The elimination of the abnormal operation associated with an intermediate load is due mainly to the feature that the isolation converter transformer PIT has such a loose coupling state that the coupling coefficient k is smaller than 0.7 for example.

It has been confirmed that the above-described abnormal operation associated with an intermediate load readily arises if a voltage resonant converter includes a secondary-side series resonant circuit. Specifically, the abnormal operation is attributed to the interaction between the primary-side parallel resonant circuit that forms the voltage resonant converter and the secondary-side series resonant circuit, due to the simultaneous operation.

Accordingly, if, like the power supply circuit of the present embodiment, the coupling coefficient k of the isolation converter transformer PIT is set to a requisite value lower than values of related circuits, the above-described interaction between the primary-side parallel resonant circuit and secondary-side series resonant circuit is attenuated, which correspondingly eliminates the abnormal operation associated with an intermediate load.

Avoided in related voltage resonant converters is the enhancement of degree of loose coupling to such an extent that the coupling coefficient k becomes the same as that of the isolation converter transformer PIT of the present embodiment. This is because such loose coupling causes lowering of the power conversion efficiency due to an increase in loss of power transmission from the primary side to the secondary side.

However, the present embodiment has a favorable power conversion efficiency characteristic even in terms of a power supply circuit including a primary-side voltage resonant converter.

The achievement of high power conversion efficiency in the present embodiment is due to the following configuration.

It is known that a power supply circuit including a voltage resonant converter combined with a secondary-side series resonant circuit is originally advantageous for obtaining high power conversion efficiency. Furthermore, if a single-ended system is employed for a voltage resonant converter and therefore the number of switching elements is one, which is the bare minimum number, switching loss of the converter is smaller compared with configurations including plural switching elements, such as a half-bridge connection system, a full-bridge connection system, and a push-pull system. This reduced switching loss also leads to the enhancement of the power conversion efficiency.

In addition, the present embodiment eliminates the occurrence of abnormal operation associated with an intermediate load to thereby allow adequate ZVS operation as described above. In this abnormal operation phenomenon, the switching element Q1 is turned on and the positive switching current flows between the source and drain before the original turn-on timing of the switching element Q1. Such behavior of the switching current leads to an increase of switching loss. The present embodiment prevents the occurrence of this behavior of the switching current corresponding to the abnormal operation, and thus eliminates the increase of switching loss. This feature is also one factor in the enhancement of the power conversion efficiency.

Moreover, the present inventor has confirmed that varying the resonant frequencies fo1 and fo2 of the primary-side parallel resonant circuit and the secondary-side series resonant circuit, respectively, also leads to a change of the power conversion efficiency characteristic (ηAC→DC). Therefore, the power conversion efficiency in the power supply circuit of the present embodiment can be enhanced also by setting the resonant frequencies fo1 and fo2 of the primary-side parallel resonant circuit and the secondary-side series resonant circuit so that as favorable a power conversion efficiency characteristic as possible is achieved.

For example, it has been confirmed that when the relationship between the resonant frequencies fo1 and fo2 of the primary-side parallel resonant circuit and the secondary-side series resonant circuit is varied, the waveform of the switching current flowing through the switching element Q1 changes due to the influence of the resonant frequencies. As one example, depending on the relationship between the resonant frequencies fo1 and fo2 of the primary-side parallel resonant circuit and the secondary-side series resonant circuit, the switching current flowing through the switching element Q1 has a waveform in which the current peak appears before the turn-off timing of the switching element Q1 and the current level at the turn-off timing is lower than the peak level. This waveform includes the waveform component dependent upon the current resonant waveform obtained due to the resonant operation of the secondary-side series resonant circuit. If the level of the switching current at the turn-off timing is thus suppressed, the switching loss at the turn-off timing is correspondingly reduced, which enhances the power conversion efficiency.

As described above, in the present embodiment, the resonant frequency fo1 of the primary-side parallel resonant circuit and the resonant frequency fo2 of the secondary-side series resonant circuit are optimally set so that as high power conversion efficiency as possible is obtained, in consideration of the stability of operation of the power supply circuit.

Moreover, in the power supply circuit in FIG. 1, the isolation converter transformer PIT is designed to be in a loose coupling state based on a coupling coefficient k smaller than a certain value, to thereby eliminate bias magnetization of the secondary winding N2. Thus, a bias of the peak levels of the secondary-side rectified currents flowing through the rectifier diodes Do1 and Do2 in the secondary-side rectifier circuit is eliminated, which leads to equalized peak levels. The imbalance between the rectified currents causes an increase in power loss due to conduction loss in the rectifier diodes. In contrast, if the imbalance between the peak levels of the secondary-side rectified currents is absent like the present embodiment, the power loss attributed to the imbalance is also eliminated, which offers a further factor in the enhancement of the power conversion efficiency.

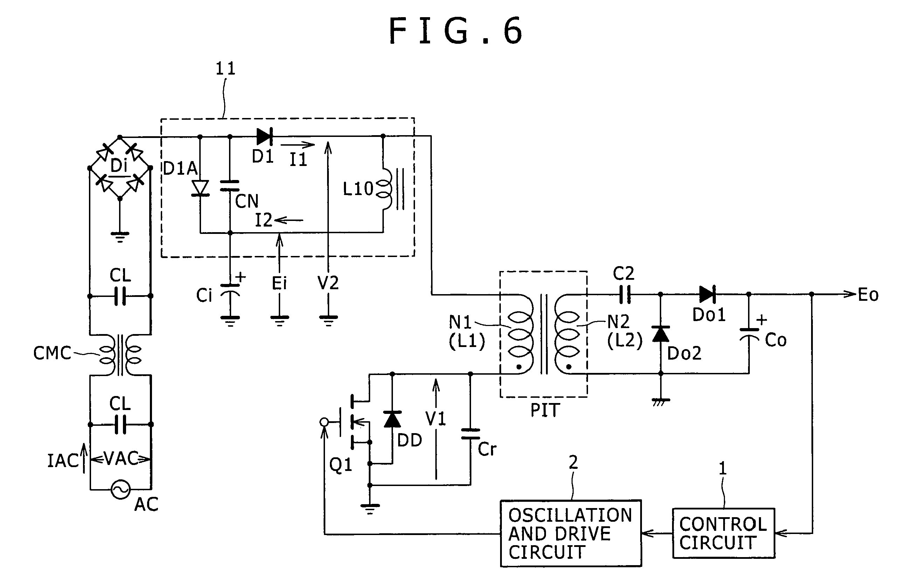

FIG. 6 illustrates a configuration example of a power supply circuit according to a second embodiment of the invention. The same parts in FIG. 6 as those in FIG. 1 are given the same numerals and will not be described below.

The power supply circuit in FIG. 6 is provided with a power factor improvement circuit 11. The power factor improvement circuit 11 arises from addition of a low-speed rectifier diode D1A to the configuration of the power factor improvement circuit 10 in the first embodiment shown in FIG. 1.

The anode of the rectifier diode D1A is connected to the positive output terminal of a bridge rectifier circuit Di, and the cathode thereof is connected to the positive electrode of a smoothing capacitor Ci. Therefore, in the power factor improvement circuit 11, the diode D1A is connected in parallel to a series circuit of a switching diode D1 and a high-frequency choke coil L10. A filter capacitor CN in the present embodiment is connected in parallel to the series circuit of the switching diode D 1 and the high-frequency choke coil L 10, and in parallel to the rectifier diode D1A.

In the power supply circuit of the second embodiment with the thus formed power factor improvement circuit 11, a rectified current obtained as the rectified output from the positive output terminal of the bridge rectifier circuit Di flows with being branched into the series circuit of the switching diode D 1 and the high-frequency choke coil L10, and into the rectifier diode D1A. Also in such operation, the basic operation of the power factor improvement circuit 11 is the same as that of the power factor improvement circuit 10. Specifically, an alternating voltage with the switching cycle is superimposed on the rectified current path by regenerating and feeding back the switching output current as power. This alternating voltage causes the switching diode D1 to implement switching for the rectified current and thus increase the conduction angle of the AC input current IAC, so that power factor improvement is achieved.

In addition, since the rectified current from the bridge rectifier circuit Di flows with being branched also into the rectifier diode D1A as described above, the amount of the rectified current flowing through the switching diode D 1 is decreased. This reduces switching loss in the switching diode D 1 and therefore enhances the power conversion efficiency. This advantage becomes more effective as the load becomes heavier and therefore the current flowing through the power supply circuit becomes larger in particular.

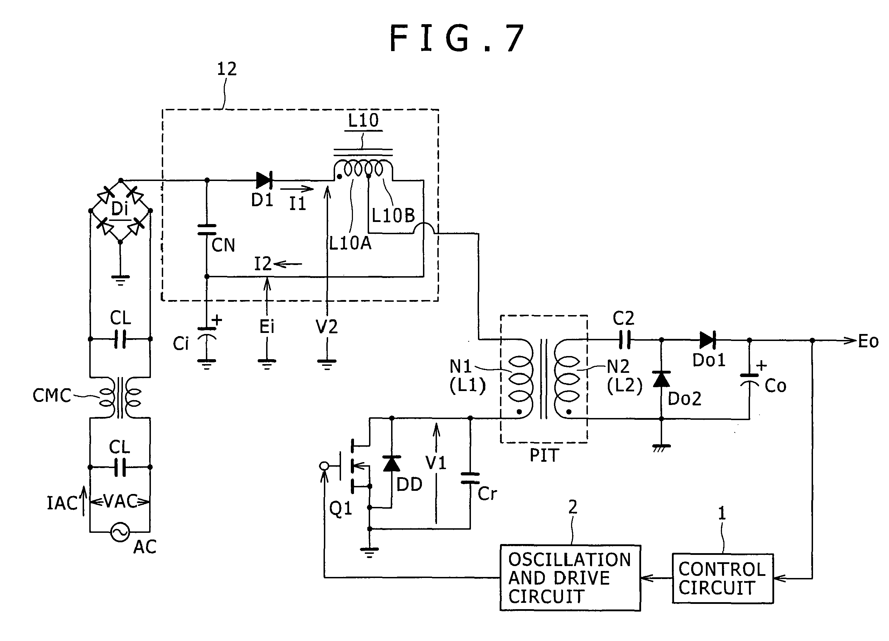

FIG. 7 illustrates a configuration example of a power supply circuit according to a third embodiment of the invention. The same parts in FIG. 7 as those in FIGS. 1 and 6 are given the same numerals and will not be described below.

The power supply circuit in FIG. 7 is provided with a power factor improvement circuit 12. A high-frequency choke coil L10 included in the power factor improvement circuit 12 is provided with a tap disposed at a predetermined position corresponding to the certain number of turns of the winding, so that the winding is divided into two choke coil winding portions L10A and L10B on either side of the tap as the boundary. The end of the choke coil winding portion L10A (winding-start end of the high-frequency choke coil L10) opposite to the end on the center tap side is connected to the cathode of a switching diode D1. The end of the choke coil winding portion L10B (winding-finish end of the high-frequency choke coil L10) opposite to the end on the center tap side is connected to the positive electrode of a smoothing capacitor Ci.

The switching output feedback node in the present embodiment is the tap of the high-frequency choke coil L10 (connecting node between the choke coil winding portions L10A and L10B), and the winding-finish end of a primary winding N1 is connected to the tap. In addition, a filter capacitor CN is connected in parallel to a series circuit of the switching diode D1 and the high-frequency choke coil L10 (choke coil winding portions L10A and L10B).

In the thus formed power factor improvement circuit 12, the rectified current output from the positive output terminal of the bridge rectifier circuit Di flows to the smoothing capacitor Ci via the path from the switching diode D1 to the high-frequency choke coil L10 (from L10A to L10B). At this time, the switching output current obtained in the primary winding N1 is regenerated as power for the choke coil winding portions L10A and L10B coupled to the switching output feedback node, and is fed back to the smoothing capacitor Ci via the high-frequency choke coil L10. Since the choke coil winding portions L10A and L10B arise from the division of one inductor due to the formation of a tap, the choke coil winding portions L10A and L10B can be regarded as being tightly coupled to each other (coupling coefficient is 1) in terms of magnetic coupling therebetween. Accordingly, the operation of feeding back the switching output to the power factor improvement circuit 12 can be regarded as including voltage feedback operation. Specifically, in this voltage feedback operation, an alternating voltage dependent upon the switching output transmitted to the primary winding N1 is induced in one choke coil winding portion (L10B) as a voltage, and the alternating voltage is also induced in the other choke coil winding portion (L10A) via tight coupling between the choke coil winding portions L10A and L10B. In this manner, the power factor improvement circuit 12 employs a switching output feedback system in which a power regenerative system based on magnetic coupling is combined with a voltage feedback system based on magnetic coupling. In response to this switching output feedback, the switching diode D1 operates to implement switching for the rectified current to thereby achieve power factor improvement similarly to the above-described embodiments.

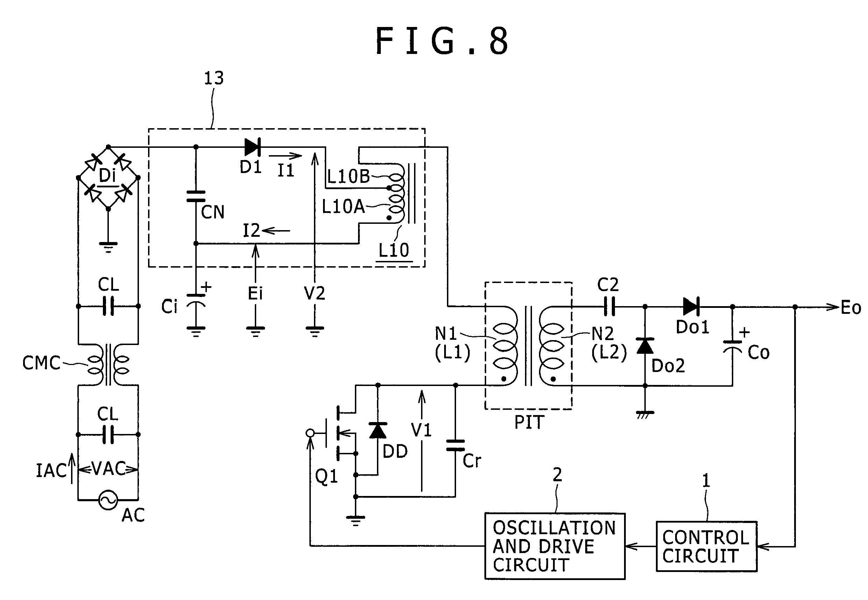

FIG. 8 illustrates a configuration example of a power supply circuit according to a fourth embodiment of the invention. The same parts in FIG. 8 as those in FIGS. 1, 6 and 7 are given the same numerals and will not be described below.

Also in a power factor improvement circuit 13 shown in FIG. 8, a high-frequency choke coil L10 is provided with a tap disposed at a predetermined intermediate position on the winding, so that the winding of the coil L10 is divided into choke coil winding portions L10A and L10B on either side of the tap as the boundary. However, in the present embodiment, the tap as the connecting node between the choke coil winding portions L10A and L10B is connected to the cathode of a switching diode D1. The winding-finish end of the primary winding N1 is connected to the end of the high-frequency winding portion L10B (winding-finish end of the high-frequency choke coil L10) opposite to the end coupled to the center tap. The end of the high-frequency winding portion L10A (winding-start end of the high-frequency choke coil L10) opposite to the end coupled to the center tap is connected to the positive electrode of a smoothing capacitor Ci.

According to this connecting structure, a series circuit of the switching diode D1 and the high-frequency winding portion L10A is provided in the middle of the rectified current line between the positive output terminal of a bridge rectifier circuit Di and the positive electrode of the smoothing capacitor Ci. Furthermore, the primary winding N1 is coupled via the inductance of the high-frequency winding portion L10B to the connecting node (tap) between the choke coil winding portions L10A and L10B, which is the switching output feedback node.

The thus constructed power factor improvement circuit 13 provides operation in which the switching output current obtained in the primary winding N 1 is regenerated as power and is fed back to the smoothing capacitor Ci via the high-frequency winding portion L10B and the high-frequency winding portion L10A. That is, switching output feedback due to a power regenerative system based on magnetic coupling is carried out. In addition, the power factor improvement circuit 13 can be regarded as also providing voltage feedback operation. Specifically, an alternating voltage dependent upon the switching output transmitted to the primary winding N1 is induced in the choke coil winding portion L10B as a voltage, and the alternating voltage is also induced in the choke coil winding portion L10A via tight coupling between the choke coil winding portions L10A and L10B. In this manner, the power factor improvement circuit 13 also employs a switching output feedback system in which a power regenerative system based on magnetic coupling is combined with a voltage feedback system based on magnetic coupling. The switching diode D1 implements switching for the rectified current in response to the switching output fed back through this operation, and thus power factor improvement is achieved.

If the switching output is fed back via the primary winding N1 based on a configuration in which the high-frequency choke coil L10 is provided with a tap like the above-described third and fourth embodiments, the power conversion efficiency when the load is heavy is enhanced. This is due to the power factor improvement operation in which power regeneration and voltage feedback arise in a complex manner. This complex operation of the power regeneration and voltage feedback increases the feedback amount of the switching output. Therefore, for obtaining the requisite power factor, such power supply circuit design is available that the amount of power used in the primary winding N1 is reduced corresponding to the increase of the switching output feedback amount. This leads to a decrease in power loss.

In the third and fourth embodiments, the power factor can be varied depending on the numbers of turns (turn ratio) of the high-frequency winding portions L10A and L10B. It has been confirmed that the larger number of turns of the high-frequency winding portion L10B allows a higher power factor but causes corresponding power loss. In the present embodiment, in terms of balance between the necessary power factor and power loss, the numbers of turns of the high-frequency winding portions L10A and L10B are set so that the relationship L10A > L10B is satisfied.

The third and fourth embodiments can employ the feature of the second embodiment. Specifically, the power factor improvement circuits 12 and 13 of the third and fourth embodiments may be provided with a slow-recovery rectifier diode D1A so that the rectified current from the bridge rectifier circuit Di is branched into the path including the switching diode D 1 and into the path of the rectifier diode D1A. In both the third and fourth embodiments (the power factor improvement circuit 12 (FIG. 7) and the power factor improvement circuit 13 (FIG. 8)), the anode of the rectifier diode D1A is connected to the positive output terminal of the bridge rectifier circuit Di, and the cathode thereof is connected to the positive electrode of the smoothing capacitor Ci. Due to such a configuration, an advantage of further enhancement of the power conversion efficiency when the load is heavy can be expected.

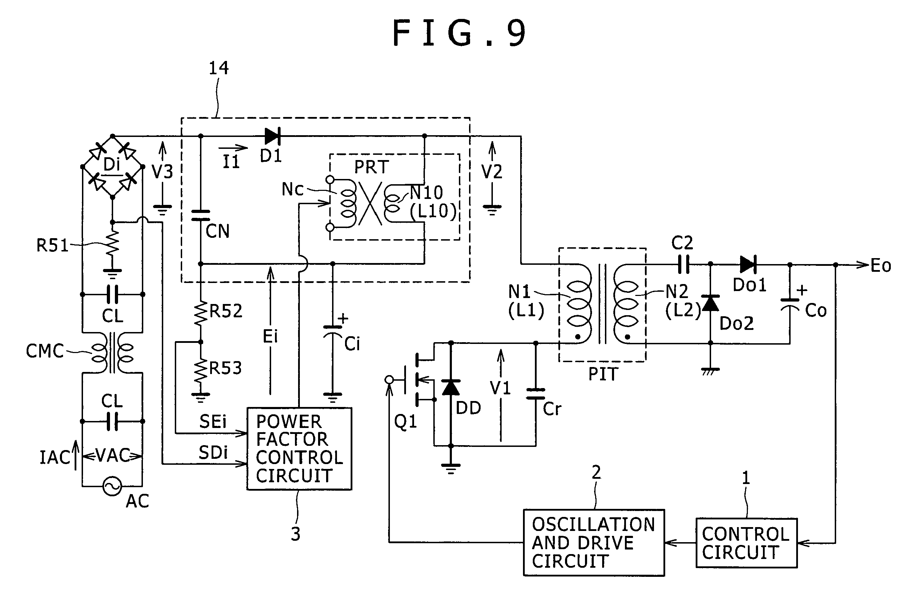

FIG 9 illustrates a configuration example of a power supply circuit according to a fifth embodiment of the invention. The same parts in FIG. 9 as those in FIG 1 are given the same numerals and will not be described below.

Parameters of main components are as follows: an isolation converter transformer PIT employs an EER-35 core and has a gap G of 2.2 mm, the numbers of turns of primary and secondary windings N1 and N2 are 36 T and 30 T, respectively, a coupling coefficient k is 0.67, the capacitance of a primary-side parallel resonant capacitor Cr is 6800 pF, and the capacitance of a secondary-side series resonant capacitor C2 is 0.047 µF.

In a power factor improvement circuit 14 in FIG. 9, a variable high-frequency choke coil PRT is used instead of the high-frequency choke coil L10, which is included in the power factor improvement circuit 10 of the first embodiment in FIG. 1.

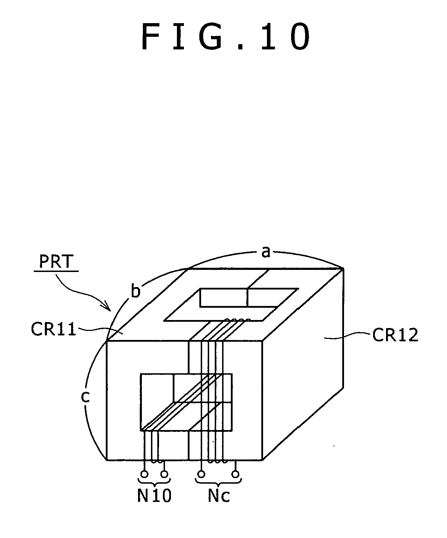

FIG. 10 illustrates one structural example of the variable high-frequency choke coil PRT. The variable high-frequency choke coil PRT has four magnetic poles, and is formed of a three-dimensional core obtained by combining cores CR11 and CR12 having the same shape, a high-frequency choke coil winding N10, and a control winding Nc for power factor improvement (hereinafter, PFC control winding Nc). The high-frequency choke coil winding N10 and the PFC control winding Nc are wound around the magnetic poles perpendicularly to each other as shown in FIG. 10. From a viewpoint of the both ends of the high-frequency choke coil winding N10 of the variable high-frequency choke coil PRT with such a structure, the high-frequency choke coil winding N10 serves as an inductor L10. Since this three-dimensional core is a saturable core of which saturation varies depending on the magnitude of a current flowing through the PFC control winding Nc, the inductance of the coil can be controlled depending on the magnitude of a current flowing through the PFC control winding Nc. The core of the variable high-frequency choke coil PRT is a ferrite magnetic core with a size of 16 × 16 × 22 mm. The numbers of turns of the high-frequency choke coil winding N10 and the PFC control winding Nc are 10 T and 1000 T, respectively.

The fifth embodiment includes, besides the components of the first embodiment, the following circuits in order to control the variable high-frequency choke coil PRT: a circuit for detecting a signal SDi corresponding to the current flowing through a bridge rectifier circuit Di; a circuit for detecting a signal SEi corresponding to the magnitude of a rectified and smoothed voltage Ei; and a power factor control circuit 3 that controls the magnitude of the inductance of the inductor L10 arising in the high-frequency choke coil winding N10 of the variable high-frequency choke coil PRT depending on the magnitude of the signal SDi and/or the magnitude of the signal SEi.

The detecting of the signal SDi corresponding to the current flowing through the bridge rectifier circuit Di is implemented through detecting of the voltage across a resistor R51. The detecting of the signal SEi corresponding to the magnitude of the rectified and smoothed voltage Ei is implemented through division of the rectified and smoothed voltage Ei with use of resistors R52 and R53.

The power factor control circuit 3 implements control as follows. The power factor control circuit 3 applies a current to the PFC control winding Nc to thereby control the magnitude of the inductance of the inductor L10 in the variable high-frequency choke coil PRT. This current is based on the signal SEi, which depends on the magnitude of the rectified and smoothed voltage Ei, and/or the signal SDi, which depends on the magnitude of absolute value of the current flowing from a commercial alternating-current power supply AC to the bridge rectifier circuit Di. Specifically, the magnitude of the current flowing to the PFC control winding Nc ranges from 50 mA (milliampere) to 5 mA, and correspondingly the inductance of the inductor L10 varies in the range from 10 µH (microhenry) to 50 µH.

In this manner, the current based on the signal SDi and/or the signal SEi is applied to the PFC control winding Nc to thereby control the magnitude of the inductance of the inductor L10 in the variable high-frequency choke coil PRT, so that the magnitude of the parallel resonant current can be changed. That is, the power factor can be improved favorably by controlling the magnitude of the inductance of the inductor L10 depending on changes of the load power and the AC input voltage VAC.

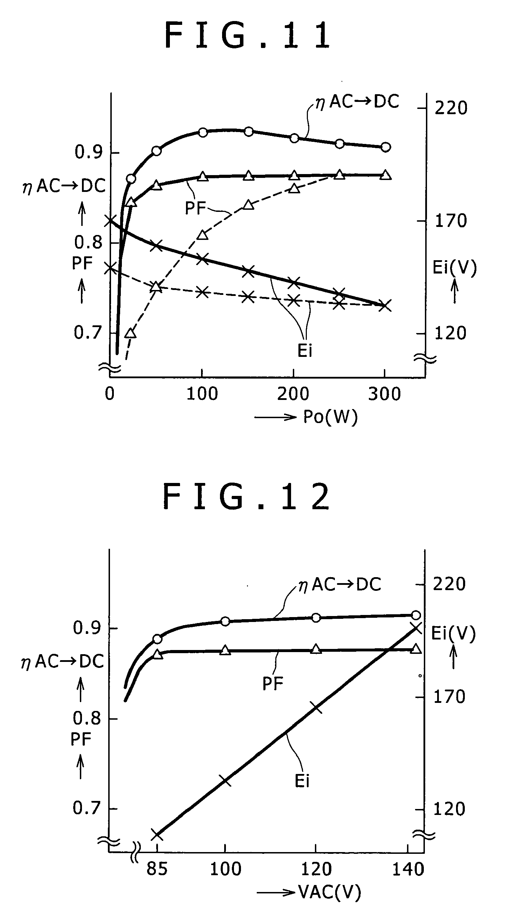

FIG. 11 shows, as the experimental results on the power supply circuit of the fifth embodiment, the rectified and smoothed voltage (DC input voltage) Ei, the power factor (PF) and the AC to DC power conversion efficiency (ηAC→DC) associated with load variation in the range from the maximum load power Pomax of 300 W to the minimum load power Pomin of 0 W (no load) under the input voltage condition of the AC input voltage VAC of 100 V. In FIG. 11, the dashed lines indicate the characteristics obtained when the PFC control winding Nc is absent, while the full lines indicate the characteristics obtained when the PFC control winding Nc is provided and the power factor control circuit 3 operates.

In addition, FIG. 12 shows, as the experimental results on the power supply circuit of the fifth embodiment, the rectified and smoothed voltage (DC input voltage) Ei, the power factor (PF) and the AC to DC power conversion efficiency (ηAC→DC) associated with variation of the AC input voltage VAC in the range from 85 V to 144 V under the constant load condition of the maximum load power Pomax of 300 W.

As is apparent from FIGS. 11 and 12, the power supply circuit of the fifth embodiment, in which the PFC control winding Nc is provided and the inductance of the inductor L10 is controlled by the power factor control circuit 3, offers an advantage of obtaining a favorable power factor more than 0.85 irrespective of load variation in addition to the above-described various advantages offered by the power supply circuit of the first embodiment.

The control circuit 3 may use either one of the signals SDi and SEi for control.

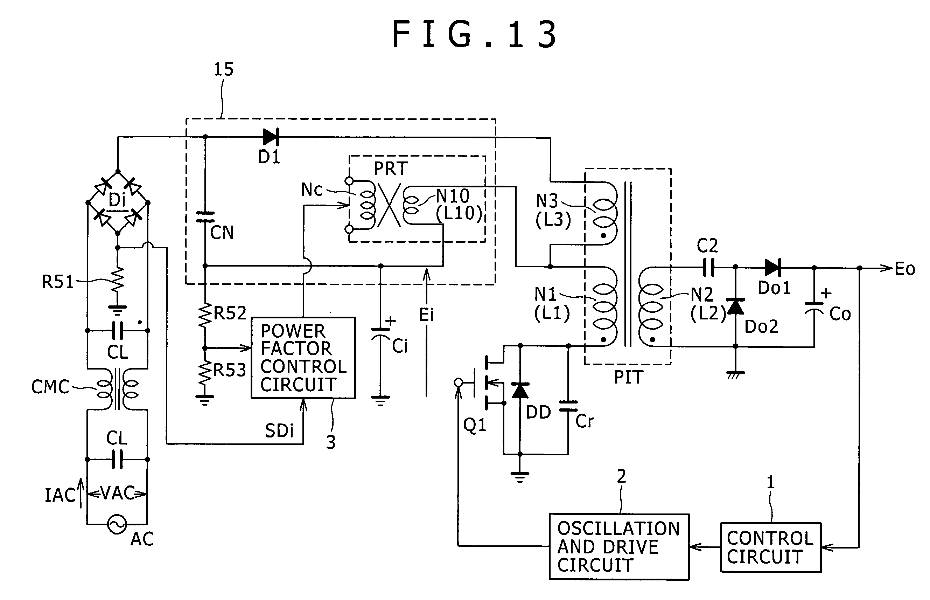

FIG. 13 illustrates a configuration example of a power supply circuit according to a sixth embodiment of the invention as a modification of the fifth embodiment. The same parts in FIG 13 as those in FIG 9 are given the same numerals and will not be described below. The power supply circuit in FIG 13 is provided with a power factor improvement circuit 15. In addition, an isolation converter transformer PIT includes a tertiary winding N3 besides a primary winding N1 and a secondary winding N2. The sixth embodiment includes a variable high-frequency choke coil L10, a switching diode D1 and a filter capacitor CN. The variable high-frequency choke coil L10 is to supply a smoothing capacitor Ci with a component of the switching output current in one direction obtained in the primary winding N1. The switching diode D1 is to supply a bridge rectifier circuit Di with a component of the switching output current in the other direction (opposite to the one direction) obtained in the tertiary winding N3. The filter capacitor CN is provided for the bypass of the switching output current obtained in the primary winding.

By thus obtaining from different windings the current to flow through the variable high-frequency choke coil L10 and the current to flow through the switching diode D1, the power factor can be improved and the flexibility in circuit design can be enhanced.

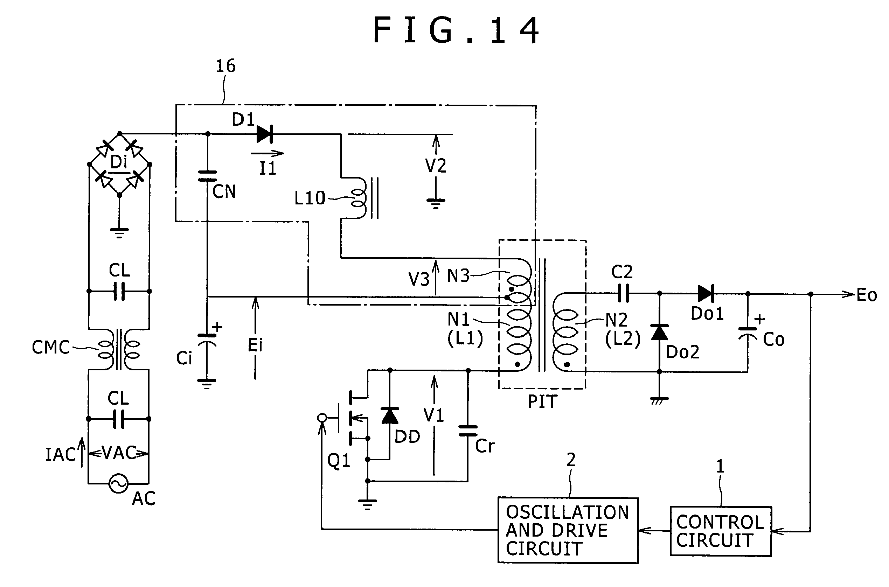

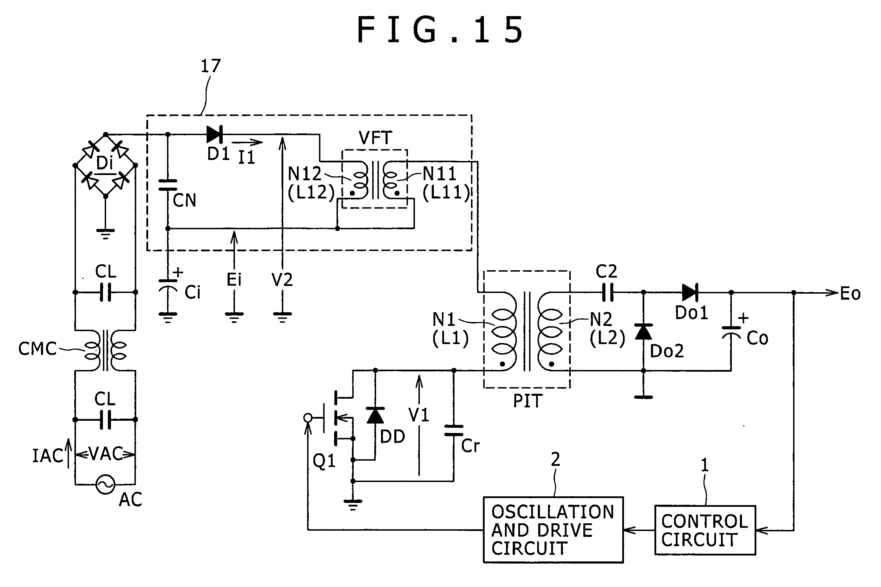

Descriptions will be made below with reference to FIGS. 14 and 15 about variations of a configuration that achieves power factor improvement based on magnetic coupling by use of a voltage feedback system in which the switching voltage obtained in a primary winding is fed back, as modifications common to the first to sixth embodiments of the present invention.

In order to form a power factor improvement circuit 16 in the power supply circuit of FIG. 14, a tertiary winding N3 having the predetermined number of turns is wound on the primary side of an isolation converter transformer PIT. The tertiary winding N3 is provided in such a manner that the winding-start end thereof is connected to the winding-finish end of the primary winding N1 as shown in the drawing. In practice, e.g. the predetermined number of turns of further additional winding of the primary winding N 1 can provide the tertiary winding N3. In this case, the primary and tertiary windings N1 and N3 can be regarded as being magnetically coupled to each other. Thus, an alternating voltage as the switching output transmitted to the primary winding N 1 is induced in the tertiary winding N3.

In addition, in the power factor improvement circuit 16, the anode of a fast-recovery switching diode D1 (power factor improvement switching element) is connected to the positive output terminal of a bridge rectifier circuit Di. The cathode of the switching diode D1 is connected in series to a high-frequency choke coil L10, and is coupled to the winding-finish end of the tertiary winding N3 via the choke coil L10. The tap for the primary-side winding as the connecting node between the winding-start end of the tertiary winding N3 and the primary winding N 1 is connected to the positive electrode of a smoothing capacitor Ci. That is, a series circuit of the switching diode D1 (anode to cathode), the high-frequency choke coil L10 and the tertiary winding N3 is provided between the positive output terminal of the bridge rectifier circuit Di and the positive electrode of the smoothing capacitor Ci.

Furthermore, a filter capacitor CN is connected in parallel to the series circuit of the switching diode D1, the high-frequency choke coil L10 and the tertiary winding N3. The filter capacitor CN is to suppress normal mode noise.

The operation of the thus formed power factor improvement circuit 16 is as follows.

The primary-side switching converter in the power supply circuit of FIG. 14 is a voltage resonant converter. Therefore, during the periods when a switching element Q1 is in the off-state, voltage resonant operation is obtained in which charging/discharging currents flow between the primary winding N1 and a primary-side parallel resonant capacitor Cr. Thus, a sinusoidal pulse voltage (resonant pulse voltage) arises as a voltage V1 across the primary-side parallel resonant capacitor Cr (switching element Q1) during the periods when the switching element Q1 is in the off-state. Since the power factor improvement circuit 16 includes the tertiary winding N3 magnetically coupled to the primary winding N1, the resonant pulse voltage thus generated in the primary winding N1 is induced in the tertiary winding N3. That is, an alternating voltage with the switching cycle is induced in the tertiary winding N3.

The tertiary winding N3 is provided together with the switching diode D1 and the high-frequency choke coil L10 in the middle of the rectified current path through which the rectified current flows from the bridge rectifier circuit Di to the smoothing capacitor Ci. Therefore, the alternating voltage induced in the tertiary winding N3 is superimposed on the rectified output voltage from the bridge rectifier circuit Di. That is, this power supply circuit employs a voltage feedback system in which the switching output of the switching element Q1 is fed back as a voltage to the rectified current path via the magnetic coupling between the primary and tertiary windings N1 and N3.

Since the feedback voltage is thus superimposed on the rectified current path, the voltage applied to the switching diode D1 has the waveform resulting from superposition of the alternating voltage component with the switching cycle on a rectified and smoothed voltage Ei. Due to application of this alternating voltage component superimposed on the rectified and smoothed voltage Ei to the fast-recovery switching diode D1, the diode D1 implements switching operation when the absolute value of positive/negative level of the AC input voltage VAC is larger than about half of its peak value for example, to thereby intermittently block the rectified current directed toward the smoothing capacitor Ci.

The conduction period of envelope of the thus flowing rectified current is such that the current flows also during the periods when the level of the rectified output voltage from the bridge rectifier circuit Di is lower than that of the voltage across the smoothing capacitor Ci. In addition, the conduction period of the AC input current IAC that flows based on the AC input voltage VAC substantially corresponds with the conduction period of this rectified current. Specifically, the conduction angle of the AC input current IAC is increased compared with a configuration including no power factor improvement circuit, and the waveform of the AC input current IAC is brought close to that of the AC input voltage VAC. That is, power factor improvement is achieved.

For an experiment on an actual power supply circuit with the above-described configuration of FIG. 14, major parts in the circuit were chosen to have the following parameters, so that experimental results to be described later were obtained.

The isolation converter transformer PIT was based on the structure shown in FIG 2, and an EER-35 core was chosen for the EE-shaped core (CR1, CR2). The gap G1 was designed to have a gap length of 2.2 mm. The numbers of turns of the primary and secondary windings N1 and N2 were set to 40 T and 30 T, respectively. According to the structure of this isolation converter transformer PIT, the coupling coefficient k between the primary and secondary sides in the isolation converter transformer PIT was set to a value smaller than 0.7, e.g., about 0.67.

The number of turns of the tertiary winding N3 was set to 9 T.

For the high-frequency choke coil L10, an EE-22 core was chosen and a gap of 1.4 mm was formed, so that the inductance thereof was set to 27 µH.

As is well known, the above-described EER and EE cores are one of types and standards of product cores. It is known that the types also include an ER type. The sectional shapes of cores of all the EER, ER and EE types are an E-character shape or EE-character shape. Therefore, cores of all the EER, ER and EE types are treated as the E-shaped core and EE-shaped core in the present specification.

The capacitances of the primary-side parallel resonant capacitor Cr, the filter capacitor CN and the secondary-side series resonant capacitor C2 were chosen as follows: Cr = 7500 pF, CN = 1 µF and C2 = 0.047 µF.

The allowable load power range was from the maximum load power Pomax of 300 W to the minimum load power Pomin of 0 W (no load). The rated level of the secondary-side DC output voltage Eo was 175 V.

As the experimental results on the power supply circuit in FIG. 14, the following results were obtained.

The power factor PF, which depends on the operation of the power factor improvement circuit 16, has a tendency of increasing as the load becomes lighter for the load variation range from the maximum load power Pomax of 300 W to the load power Po of about 100 W. In contrast, the power factor PF tends to decrease as the load becomes lighter in the range of the load power Po smaller than 100 W. As a whole, the power factor PF is higher than 0.75 for the variation range of the load power Po from 300 W to 25 W, and therefore it can be said that the power factor sufficient for practical use is obtained. For variation of the AC input voltage VAC, the power factor PF shows a characteristic of decreasing with a gentle slope as the AC input voltage VAC becomes higher.

The reason for the above-described tendency that the level of the power factor PF increases as the load becomes lighter is because constant-voltage control is based on PWM control. Specifically, in response to an increase in the level of the secondary-side DC output voltage Eo associated with a decrease in the load, the OFF period of the switching element Q1 within one switching cycle is extended in the driving of the switching element Q1. Thus, the ON period is correspondingly shortened, which raises the peak level of the resonant pulse voltage (appearing as a voltage V1) arising due to the charging/discharging of a current to/from the primary-side parallel resonant capacitor Cr during the ON period. In this manner, when the load becomes lighter, the resonant pulse voltage with an increased peak level is fed back, which increases the voltage feedback amount. This increase in the voltage feedback amount enhances the power factor, which is improved by the power factor improvement circuit 16 employing a voltage feedback system. In addition, the increase in the feedback amount also enhances the level of the voltage superimposed on the smoothing capacitor Ci, which also raises the level of the rectified and smoothed voltage Ei.

As for the AC to DC power conversion efficiency (ηAC→DC), it is almost constant against load variation, while for AC input voltage variation it increases with a gentle slope as the AC input voltage VAC becomes higher. As a result of the measurement, the efficiency ηAC→DC was 90.8% under the condition of the maximum load power Pomax of 300 W and the AC input voltage VAC of 100 V. As a comparison, the AC to DC power conversion efficiency of the power supply circuit in FIG. 19 is 83% under the same condition (Pomax = 300 W, VAC = 100 V), and therefore the circuit of FIG. 14 achieves an improvement of about 7.8%. In addition, along with this, the AC input power in the circuit of FIG. 14 is reduced by about 31.1 W compared with that in the power supply circuit of FIG. 19.

A power factor improvement circuit 17 in the power supply circuit shown in FIG. 15 will be described below.

The power factor improvement circuit 17 is provided in the middle of the rectified current path in a rectifying and smoothing circuit for producing a DC input voltage (Ei) from a commercial alternating-current power supply AC, and employs a configuration for achieving power factor improvement by use of a voltage feedback system.

As shown in the drawing, in the power factor improvement circuit 17, the anode of a fast-recovery switching diode (power factor improvement switching element) D1 is connected to the positive output terminal of a bridge rectifier circuit Di. The cathode of the switching diode D1 is connected in series to a secondary winding N12 of a power factor improvement transformer VFT, and is coupled via the secondary winding N12 to the positive electrode of a smoothing capacitor Ci. That is, in the rectified current path for producing the rectified and smoothed voltage Ei, a series circuit of the switching diode D 1 and the secondary winding N12 is provided in the middle of the line between the positive output terminal of the bridge rectifier circuit Di and the positive electrode of the smoothing capacitor Ci. The secondary winding N12 serves as an inductance, i.e., a choke coil against the rectified current that is an alternating current intermittently flowing with the switching cycle.

A filter capacitor CN is provided to absorb an alternating component with the switching cycle arising due to the switching operation of the switching diode D1 to thereby suppress normal mode noise. In this circuit, the filter capacitor CN is connected in parallel to the series circuit of the switching diode D1 and the secondary winding N12.

The power factor improvement transformer VFT has a structure in which a primary winding (power factor improvement primary winding) N11 and the secondary winding (power factor improvement secondary winding) N12 are wound around a core so as to be magnetically coupled to each other. The power factor improvement transformer VFT includes a so-called split bobbin in which divided winding positions are defined. The primary winding N11 and the secondary winding N12 are wound around the split bobbin and in the respective winding positions separately. This structure provides a certain coupling coefficient corresponding to loose coupling as the coupling degree between the primary and secondary sides.

In the thus constructed power factor improvement circuit 17, current and voltage as the switching output obtained in a primary winding N1 of an isolation converter transformer PIT are transmitted to the primary winding N11 in the power factor improvement transformer VFT, which is provided in series between the primary winding N1 and the smoothing capacitor Ci. Thus, a voltage with the switching cycle is generated in the primary winding N11 of the power factor improvement transformer VFT. In the power factor improvement transformer VFT, the alternating voltage obtained in the primary winding N11 induces an alternating voltage in the secondary winding N12.

The secondary winding N12 in the power factor improvement transformer VFT is connected in series to the switching diode D1, and is provided in the middle of the path through which the rectified current arising from rectification of a commercial alternating-current supply voltage AC flows. Therefore, the alternating voltage induced in the secondary winding N12 is superimposed on the rectified output voltage. Specifically, due to the power factor improvement transformer VFT, the primary-side series resonant current is fed back as a voltage to the smoothing capacitor Ci existing in the rectified current path via the magnetic coupling in the power factor improvement transformer VFT. This power factor improvement circuit system that feeds back the switching output as a voltage to thereby improve the power factor is referred to as a voltage feedback system.

The switching diode D1 operates to implement switching for (intermittently block) the rectified current due to the above-described superimposed alternating voltage. As a result of this operation, the rectified current flows also during the periods when the level of the AC input voltage VAC is lower than that of the voltage across the smoothing capacitor Ci. That is, the conduction angle of the rectified current is increased.

In step with this increase in the conduction angle of the rectified current, the conduction angle of the AC input current IAC is also increased. Thus, the average waveform of the AC input current IAC approaches the waveform of the AC input voltage VAC, which leads to power factor improvement.

For an experiment on an actual power supply circuit with the above-described configuration of FIG. 15, major parts in the circuit were chosen to have the following parameters, so that experimental results to be described later were obtained.

The isolation converter transformer PIT was based on the structure shown in FIG 2, and an EER-35 core was chosen for the EE-shaped core (CR1, CR2). The gap G1 was designed to have a gap length of 2.2 mm. The numbers of turns of the primary and secondary windings N1 and N2 were set to 33 T and 30 T, respectively. According to the structure of this isolation converter transformer PIT, the coupling coefficient k between the primary and secondary sides in the isolation converter transformer PIT was set to a value smaller than 0.7, e.g., about 0.67.

For the power factor improvement transformer VFT, an EE-25 core was chosen and a gap of 1.6 mm was formed. In addition, the primary and secondary windings N11 and N12 with the predetermined numbers of turns were wound, so that inductances L11 and L12 of the primary and secondary windings N11 and N12 were set to 60 µH and 27 µH, respectively.

As is well known, the above-described EER and EE cores are one of types and standards of product cores. It is known that the types also include an ER type. The sectional shapes of cores of all the EER, ER and EE types are an E-character shape or EE-character shape. Therefore, cores of all the EER, ER and EE types are treated as the E-shaped core and EE-shaped core in the present specification.

The capacitances of the primary-side parallel resonant capacitor Cr, the filter capacitor CN and the secondary-side series resonant capacitor C2 were chosen as follows: Cr = 0.01 µF, CN = 1 µF and C2 = 0.047 µF.

The allowable load power range was from the maximum load power Pomax of 300 W to the minimum load power Pomin of 0 W (no load). The rated level of the secondary-side DC output voltage Eo was 175 V.

As the experimental results on the power supply circuit in FIG. 15, the following results were obtained.

The power factor PF, which depends on the operation of the power factor improvement circuit 17, has a tendency of decreasing in the range of about 0.8 to 0.75 as the load becomes lighter for the load variation range from the maximum load power Pomax of 300 W to about 100 W. In contrast, the power factor PF tends to increase as the load becomes lighter in the range of the load power Po smaller than 100 W. As a whole, the power factor PF is higher than 0.75 for the variation range of the load power Po from 300 W to 25 W, and therefore it can be said that the power factor sufficient for practical use is obtained. For variation of the AC input voltage VAC, the power factor PF shows a characteristic of being almost constant at about 0.8 for the range of the voltage VAC from 85 V to 140 V.

The reason for the above-described tendency that the level of the power factor PF increases as the load power Po becomes lower from about 100 W is that constant-voltage control is based on PWM control. Specifically, in response to an increase in the level of the secondary-side DC output voltage Eo associated with a decrease in the load, the OFF period of a switching element Q1 within one switching cycle is extended in the driving of the switching element Q1. Thus, the ON period is correspondingly shortened, which raises the peak level of the resonant pulse voltage (appearing as a voltage V1) arising due to the charging/discharging of a current to/from the primary-side parallel resonant capacitor Cr during the ON period. In this manner, when the load becomes lighter, the resonant pulse voltage with an increased peak level is fed back, which increases the voltage feedback amount. This increase in the voltage feedback amount enhances the power factor, which is improved by the power factor improvement circuit 17 employing a voltage feedback system. In addition, the increase in the feedback amount also enhances the level of the voltage superimposed on the smoothing capacitor Ci, which also raises the level of the rectified and smoothed voltage Ei.

As for the AC to DC power conversion efficiency (ηAC→DC), it is almost constant against load variation, while for AC input voltage variation it increases with a gentle slope as the AC input voltage VAC becomes higher. As a result of the measurement, the efficiency ηAC→DC was 91.1 % under the condition of the maximum load power Pomax of 300 W and the AC input voltage VAC of 100 V. As a comparison, the AC to DC power conversion efficiency of the power supply circuit in FIG. 19 is 83% under the same condition (Pomax = 300 W, VAC = 100 V), and therefore the circuit of FIG. 15 achieves an improvement of about 8.1 %. In addition, along with this, the AC input power in the circuit of FIG. 15 is reduced by about 32.2 W compared with that in the power supply circuit of FIG. 19.

It should be noted that the present invention is not limited to the above-described configurations as the embodiments. For example, other configurations are also available as the circuit configuration of details of the primary-side voltage resonant converter, and the configuration of the secondary-side rectifier circuit including a secondary-side series resonant circuit.

In addition, as the switching element, e.g. an IGBT (Insulated Gate Bipolar Transistor) or a bipolar transistor may be used instead of a MOS-FET. Moreover, although the above-described embodiments employ a separately-excited switching converter, the present invention can also be applied to a configuration employing a self-excited switching converter.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A switching power supply circuit comprising:
rectifier that is supplied with an alternating-current voltage and rectifies the alternating-current voltage;
a smoothing unit that includes a smoothing capacitor and smoothes a rectified voltage from the rectifier;
a switching unit that includes a switching element that is supplied with the rectified voltage smoothed by the smoothing unit as a direct-current input voltage and implements switching;
a switching drive unit that switch-drives the switching element;
an isolation converter transformer that includes at least a primary winding and a secondary winding that are wound in the isolation converter transformer, the primary winding being supplied with a switching output arising from switching operation of the switching unit, the switching output obtained in the primary winding inducing an alternating voltage in the secondary winding, the isolation converter transformer having a structure with such a coupling coefficient between a primary side and a secondary side that adequate zero voltage switching is ensured even in a range of certain load conditions regarded as an intermediate load condition;
a primary-side parallel resonant circuit that is formed of a leakage inductance component including the primary winding of the isolation converter transformer and a capacitance of a primary-side parallel resonant capacitor, the primary-side parallel resonant circuit offering voltage resonant operation as operation of the switching unit;
a secondary-side series resonant circuit that arises from connecting of a secondary-side series resonant capacitor in series to the secondary winding of the isolation converter transformer, and is formed of a leakage inductance component including the secondary winding and a capacitance of the secondary-side series resonant capacitor;
a secondary-side direct-current output voltage producing unit that is supplied with the alternating voltage induced in the secondary winding of the isolation converter transformer, and implements rectifying operation to thereby produce a secondary-side direct-current output voltage;
a controller that supplies the switching drive unit with a detection output dependent upon a level of the secondary-side direct-current output voltage to thereby stabilize the level of the secondary-side direct-current output voltage; and
a power factor improving unit that includes a power factor improvement switching element that intermittently blocks a rectified current due to superposition of the switching output on a rectified output arising from rectifying operation of the rectifier, the superposition being attributed to feedback of the switching output obtained in the primary winding to the smoothing capacitor.

2. The switching power supply circuit according to claim 1, wherein
the power factor improving unit includes a high-frequency choke coil that forms a series circuit together with the power factor improvement switching element, and the series circuit is provided between the rectifier and the smoothing unit.

3. The switching power supply circuit according to claim 2, wherein
one end of the primary winding of the isolation converter transformer is connected to the primary-side parallel resonant capacitor and the switching unit that are connected in parallel to each other, and the other end of the primary winding is coupled to a connecting node between the high-frequency choke coil and the power factor improvement switching element, so that a switching output current as the switching output obtained in the primary winding is regenerated for the smoothing capacitor via the high-frequency choke coil.

4. The switching power supply circuit according to claim 3, wherein
the power factor improving unit further includes a filter capacitor that is provided in parallel to the series circuit, and a rectifying element that is connected in parallel to the filter capacitor and allows branching of a rectified current arising from rectifying operation of the rectifier into the smoothing capacitor.

5. The switching power supply circuit according to claim 3, wherein
the high-frequency choke coil is a variable high-frequency choke coil formed by wounding around a saturable core a power factor improvement control winding and a high-frequency choke coil winding for applying the switching output current obtained in the primary winding to the smoothing capacitor, and a value of an inductance arising in the high-frequency choke coil winding is controlled by applying to the power factor improvement control winding a current that depends on a magnitude of the rectified and smoothed voltage and/or a magnitude of an absolute value of a current flowing to the rectifier due to input of the alternating-current voltage.

6. The switching power supply circuit according to claim 2, wherein
the isolation converter transformer includes a tertiary winding that boosts a switching output voltage as the switching output, and a series circuit of the power factor improvement switching element and the high-frequency choke coil is formed via the tertiary winding.

7. The switching power supply circuit according to claim 6, wherein
the isolation converter transformer includes a tertiary winding that boosts a switching output voltage as the switching output, and a series circuit of the power factor improvement switching element and the high-frequency choke coil is formed via the tertiary winding, and
the switching output voltage boosted by the tertiary winding is fed back to the smoothing capacitor so that the switching output voltage is superimposed on a rectified voltage arising from rectifying operation of the rectifier.

8. The switching power supply circuit according to claim 2, wherein
the power factor improving unit includes a power factor improvement transformer that has a primary winding and a secondary winding loosely coupled to each other and feeds back a switching output voltage obtained in the primary winding of the isolation converter transformer,
one end of the primary winding of the isolation converter transformer is connected to the primary-side parallel resonant capacitor and the switching unit that are connected in parallel to each other, and the other end of the primary winding of the isolation converter transformer is coupled to the smoothing capacitor via the primary winding of the power factor improvement transformer, and
the secondary winding of the power factor improvement transformer serves as the high-frequency choke coil.
